# EUROPEAN PATENT SPECIFICATION

(11) **EP 3 896 421 B1**
(45) Date of publication and mention of the grant of the patent: **10.07.2024**
(21) Application number: 19894558.6
(22) Date of filing: 11.07.2019
(51) Int. Cl.: G01M 11/02, H01Q 15/00, H01Q 3/26

(54) **INTEGRATED RESEARCH AND DEVELOPMENT PLATFORM FOR TERAHERTZ FOCAL PLANE IMAGING SYSTEM**
INTEGRIERTE FORSCHUNGS- UND ENTWICKLUNGSPLATTFORM FÜR EIN TERAHERTZ-FOKALEBENEN-ABBILDUNGSSYSTEM
PLATEFORME DE RECHERCHE ET DE DÉVELOPPEMENT INTÉGRÉE DESTINÉE À SYSTÈME D'IMAGERIE À PLAN FOCAL TÉRAHERTZ

(30) Priority: 13.12.2018 CN 201811522658
(43) Date of publication of application: 20.10.2021
(73) Proprietor: Beijing Research Institute of Telemetry, Beijing 100094 (CN); Aerospace Long March Launch Vehicle Technology Co., Ltd, Beijing 100176 (CN)
(72) Inventor: MOU, Jinchao, Beijing 100094 (CN); XU, Rongrong, Beijing 100094 (CN); LIU, Hao, Beijing 100094 (CN); YU, Yong, Beijing 100094 (CN); LI, Lianghai, Beijing 100094 (CN); LIU, Feng, Beijing 100094 (CN)
(74) Representative: Lavoix
(86) International application number: PCT/CN2019/095552
(87) International publication number: WO 2020/119107

(56) References cited:
- CN-A- 105 676 218
- CN-A- 108 649 344
- CN-A- 108 649 344
- CN-A- 109 696 299
- US-A1- 2006 062 258

## Description

The present application claims priority to Chinese Patent Application No.2018115226583, titled "INTEGRATED RESEARCH AND DEVELOPMENT PLATFORM FOR TERAHERTZ FOCAL PLANE IMAGING SYSTEM", filed on December 13, 2018 with the China National Intellectual Property Administration.

### FIELD

The present disclosure relates to the field of terahertz technology, and in particular to an integrated research and development platform for a terahertz focal plane imaging system.

### BACKGROUND

Terahertz (THz) wave is an electromagnetic radiation with a frequency ranging from 0.1THz (1THz=10¹²Hz) to 10THz (corresponding to a wavelength ranging from 30µm to 3mm), and the terahertz wave is between microwave radiation and infrared radiation in electromagnetic spectrum. The terahertz wave with a frequency ranging from 0.1 THz to 1THz has very important application potential in the field of target detection and recognition, and has great application value in application scenarios such as high-speed target detection and tracking, on-orbit non-destructive test, and complex battlefield situation perception. Compared with other terahertz detection systems, the terahertz focal plane imaging system has advantages of good performance in real-time imaging, flexible field of view, meeting genealogical equipment and the like. Therefore, with the terahertz focal plane imaging system, the above application requirements can be met.

Research on terahertz focal plane imaging technology includes designing and simulating a device, a module and a system, performing testing and function verification on the device, the module and the system, and performing principle verification on a terahertz system. The research has the following features.
1. A large frequency range, from a baseband to a terahertz band.
2. A large space size range, from a nano-scale semiconductor device to a meterscale antenna feed system.
3. Involving multiple fields, including semiconductor device filed, microwave filed, quasi-optics filed and the like.

The conventional research platforms have the following problems.

First, the conventional research platforms are independent and separated. With the design and test solutions and the platforms according to the conventional technology, a complete process including design, test, function verification and principle verification cannot be performed, resulting in a low efficiency of iteration and feedback of research results in different stages, thereby seriously affecting efficiency, completeness and accuracy of the research.

Secondly, the conventional research platform has insufficient model bases, databases and solutions. For example, the requirement for system architecture design optimization cannot be met due to lack of a behavior-level model of a terahertz device, and the co-simulation from a device level to a system level and the joint iterative optimization based on actual test results cannot be performed due to lack of an effective data interface.

Thirdly, the requirement for testing a terahertz focal plane array imaging system and key components in the terahertz focal plane array imaging system cannot fully met with the conventional research platforms. For example, the amplitude-phase consistency of each of channels in the terahertz focal plane array imaging system cannot be characterized, on-chip quasi-optical feeding manner cannot be realized, an on-chip testing on a wafer-level imaging array chip cannot be performed, and the wafer-level imaging array chip cannot be characterized. Thus, with the conventional research platforms, the accuracy of designing and testing the device, the module and the system is seriously affected, thereby affecting the development efficiency.
According to CN108649344A, a method for preparing a terahertz lens antenna group is provided. The method includes: step 1) calculating an unknown external index of the lens antenna group; and step 2) placing the imaging target point on the object plane of a lens, and obtaining an optimized lens antenna by using the size of the light spot of the image plane of a quadric surface single lens; step 3) continuing to increase the number of quadric single lenses, and continuing to optimize the added quadric surface single lens, to obtain the optimized lens antenna group; step 4) for the lens antenna group obtained in the step 3), performing the tolerance analysis on the lens antenna group by adopting the Monte Carlo method, if the diameter of the light spot at the edge of the image plane is 10 times or larger than the diameter of the light spot at the center point of the image plane, and the beam uniformity is greater than 3dB, repeating the steps 1) to 3); and step 5) placing the known feed antenna on the image plane by using the electromagnetic simulation software FEKO, to determine whether the diameter of the light spot focused on the object plane and multi-beam gain difference meet the requirement of the regulations.

### SUMMARY

In order to solve the above technical problems of the conventional technology, an integrated design and test platform for a terahertz focal plane array imaging system is provided according to the present disclosure. With the present disclosure, the design and test requirement of a complete process including design, test, function verification, and principle verification can be met, the accuracy of designing a device, a module and a system and the research efficiency can be improved, and the efficiency of developing the terahertz focal plane array imaging system can be improved.

The present disclosure is realized by performing the following technical solutions. An integrated research and development platform for a terahertz focal plane imaging system includes a terahertz integrated collaborative design and simulation sub-platform, a terahertz chip test and modeling sub-platform, a terahertz beam test and characterization sub-platform, a terahertz system test and principle verification sub-platform and a very large-scale array signal real-time acquisition and processing sub-platform. The terahertz integrated collaborative design and simulation sub-platform is configured to obtain an optimal performance index parameter of a terahertz array chip, an optimal performance index parameter of a lens and an optimal performance index parameter of an integrated front end by performing design and optimization based on a system architecture of the terahertz focal plane array imaging system, obtain a physical parameter index of the terahertz chip, a physical index parameter of the lens and a physical parameter index of the integrated front end respectively based on the optimal performance index parameter of the terahertz array chip, the optimal performance index parameter of the lens and the optimal performance index parameter of the integrated front end, obtain simulation output data based on the physical parameter index of the terahertz chip, the physical parameter index of the lens, the physical parameter index of the integrated front end, an application environment parameter and a feature parameter of a target, and transmit the simulation output data to the very large-scale array signal acquisition and processing sub-platform where the very large-scale array signal acquisition and processing sub-platform outputs a result and a simulation image of a scene and the target. The terahertz chip test and modeling sub-platform is configured to obtain a direct current parameter of the terahertz chip and a vector network parameter of the terahertz chip, obtain a model and a feature parameter of the terahertz chip based on the direct current parameter of the terahertz chip and the vector network parameter of the terahertz chip, transmit the model of the terahertz chip to the terahertz integrated collaborative design and simulation sub-platform for optimizing a geometric structure parameter and a material parameter of the terahertz chip, and transmit the feature parameter of terahertz chip to the terahertz system test and principle verification sub-platform as evaluation reference data for blind pixel detection. The terahertz beam test and characterization sub-platform is configured to output a terahertz excitation signal and a terahertz wave radiating freely in space, perform polarization transformation and beam separation on the terahertz wave, and irradiate the terahertz wave after polarization transformation and beam separation on the terahertz lens to be tested or a terahertz antenna to be tested; obtain a vector network parameter of the terahertz antenna to be tested based on the outputted terahertz signal and a signal from the terahertz antenna to be tested or a vector network parameter of the terahertz lens to be tested based on an outputted terahertz signal and a signal from the terahertz lens to be tested; obtain an antenna test parameter of the terahertz antenna to be tested based on the vector network parameter of the terahertz antenna to be tested, and obtain a lens test parameter of the terahertz lens to be tested based on the vector network parameter of the terahertz lens to be tested; input the antenna test parameter and the lens test parameter to the terahertz integrated collaborative simulation and design sub-platform as reference data for designing, optimizing, and iterating the terahertz lens and the integrated front end; and input the antenna test parameter to the terahertz system test and principle verification sub-platform as analysis reference data for blind pixel detection. The terahertz system test and principle verification sub-platform is configured to generate a terahertz modulation signal and process the terahertz modulation signal to obtain a free-space terahertz modulation wave, irradiate the free-space terahertz modulation wave on the integrated front end to be tested, and obtain an amplitude and a phase of a multi-channel intermediate frequency signal from the integrated front end to be tested, obtain a blind pixel and non-uniformity distribution of the integrated front end based on the amplitude and the phase of the multi-channel intermediate frequency signal, the feature parameter of the terahertz chip obtained by the terahertz chip test and modeling sub-platform and the antenna test parameter obtained by the terahertz beam test and characterization sub-platform, and transmit the amplitude and the phase of the multi-channel intermediate frequency signal to the very large-scale array signal real-time acquisition and processing sub-platform. The very large-scale array signal real-time acquisition and processing sub-platform is configured to convert the amplitude and the phase of the multi-channel intermediate frequency signal into a digital signal, perform image preprocessing and image processing on the digital signal to obtain the image of the target and the identification result, and transmit the image of the target and the identification result to the terahertz system test and principle verification sub-platform for display.

In the above integrated research and development platform for a terahertz focal plane imaging system, the terahertz integrated collaborative design and simulation sub-platform includes a terahertz system behavior-level simulation and analysis module, a terahertz chip-level simulation and analysis module, a terahertz component-level simulation and analysis module, and a terahertz system-level simulation and analysis module. The terahertz system behavior-level simulation and analysis module is configured to obtain the optimal performance index parameter of the terahertz array chip, the optimal performance index parameter of the lens and the optimal performance index parameter of the integrated front end by performing design and optimization based on the application environment parameter, the feature parameter of the target, and the system architecture of the terahertz focal plane array imaging system, and transmit the optimal performance index parameter of the terahertz array chip, the optimal performance index parameter of the lens and the optimal performance index parameter of the integrated front end to the terahertz chip-level simulation and analysis module and the terahertz component-level simulation and analysis module. The terahertz chip-level simulation and analysis module is configured to obtain the geometric structure parameter and the material parameter of the terahertz array chip based on the optimal performance index parameter of the terahertz array chip, obtain the physical parameter index of the terahertz array chip based on the geometric structure parameter and the material parameter of the terahertz array chip, and obtain simulation output data of the terahertz array chip based on the physical parameter index of the terahertz array chip. The terahertz component-level simulation and analysis module is configured to obtain a geometric structure parameter and a material parameter of the lens based on the optimal performance index parameter of the lens, obtain the physical parameter index of the lens based on the geometric structure parameter and the material parameter of the lens, and obtain simulation output data of the lens based on the physical parameter index of the lens. The terahertz system-level simulation and analysis module is configured to obtain a geometric structure parameter and a material parameter of the integrated front end based on the optimal performance index parameter of the integrated front end, obtain the physical parameter index of the integrated front end based on the geometric structure parameter and the material parameter of the integrated front end, and obtain simulation output data of the integrated front end based on the physical parameter index of the integrated front end.

In the above integrated research and development platform for a terahertz focal plane imaging system, the terahertz chip test and modeling sub-platform includes a wafer-level precision positioning and environment control module, a terahertz chip direct current parameter and characterization module, a terahertz chip vector network parameter test and characterization module, and a terahertz chip feature comprehensive characterization and modeling module. The wafer-level precision positioning and environment control module is configured to fix the terahertz chip. The terahertz chip direct current parameter and characterization module is configured to obtain the direct current parameter of the terahertz chip and transmit the direct current parameter to the terahertz chip feature comprehensive characterization and modeling module. The terahertz chip vector network parameter test and characterization module is configured to obtain the vector network parameter of the terahertz chip and transmit the vector network parameter to the terahertz chip feature comprehensive characterization and modeling module. The terahertz chip feature comprehensive characterization and modeling module is configured to obtain the model and the feature parameter of the terahertz chip based on the direct current parameter of the terahertz chip and the vector network parameter of the terahertz chip, transmit the model of the terahertz chip to the terahertz integrated collaborative design and simulation sub-platform for optimizing the geometric structure parameter and the material parameter of the terahertz chip, and transmit the feature parameter of the terahertz chip to the terahertz system test and principle verification sub-platform as the evaluation reference data for blind pixel detection.

In the above integrated research and development platform for a terahertz focal plane imaging system, the terahertz beam test and characterization sub-platform includes a high-precision displacement and rotation module, a terahertz horn antenna module, a terahertz quasi-optical beam transformation module, a terahertz vector network parameter test and characterization module, a terahertz antenna feature characterization module, and a terahertz quasi-optical lens feature characterization module. The high-precision displacement and rotation module is configured to fix the terahertz lens to be tested or the terahertz antenna to be tested, and control a displacement and a rotation angle of the terahertz lens to be tested or a displacement and a rotation angle of the terahertz antenna to be tested. The terahertz vector network parameter test and characterization module is configured to output the terahertz excitation signal via a port, and the terahertz horn antenna module is configured to emit the terahertz wave radiating freely in space. The terahertz quasi-optical beam conversion module is configured to receive the terahertz wave, perform polarization transformation and beam separation on the terahertz wave, and irradiate the terahertz wave after polarization transformation and beam separation on the terahertz lens to be tested or the terahertz antenna to be tested. The terahertz vector network parameter test and characterization module is configured to receive a terahertz response signal via another port from the terahertz lens to be tested or the terahertz antenna to be tested. The terahertz vector network parameter test and characterization module is configured to obtain the vector network parameter of the terahertz antenna to be tested based on the terahertz signal outputted via the port and the signal received from the terahertz antenna to be tested via the another port or the vector network parameter of the terahertz lens to be tested based on the terahertz signal outputted via the port and the signal received from the terahertz lens to be tested via the another port. The terahertz antenna feature characterization module is configured to obtain the antenna test parameter of the terahertz antenna to be tested based on the vector network parameter of the terahertz antenna to be tested, and transmit the antenna test parameter to the terahertz integrated collaborative simulation and design sub-platform and the terahertz system test and principle verification sub-platform. The terahertz quasi-optical lens feature characterization module is configured to obtain the lens test parameter of the terahertz lens to be tested based on the vector network parameter of the terahertz lens to be tested, and transmit the lens test parameter of the terahertz lens to be tested to the terahertz integrated collaborative simulation and design sub-platform.

In the above integrated research and development platform for a terahertz focal plane imaging system, the terahertz system test and principle verification sub-platform includes a terahertz modulation signal generation module, a terahertz horn antenna module, a channel output signal test module, a blind pixel and non-uniformity detection and analysis module, and a display module. The terahertz modulation signal generation module is configured to generate a terahertz modulation signal. The terahertz horn antenna module is configured to convert the terahertz modulation signal to a free-space terahertz modulation wave, and irradiate the free-space terahertz modulation wave on the integrated front end to be tested. The integrated front end to be tested outputs the multi-channel intermediate frequency signal and transmits the multi-channel intermediate frequency signal to the channel output signal test module. The channel output signal test module is configured to obtain the amplitude and the phase of the multi-channel intermediate frequency signal, and transmit the amplitude and the phase to the blind pixel and non-uniformity detection and analysis module and the very large-scale array signal real-time acquisition and processing sub-platform. The blind pixel and non-uniformity detection and analysis module is configured to obtain the blind pixel and the non-uniformity distribution of the integrated front end based on the amplitude and the phase of the multi-channel intermediate frequency signal, the feature parameter of the terahertz chip obtained by the terahertz chip test and modeling sub-platform and the antenna test parameter obtained by the terahertz beam test and characterization sub-platform. The display module is configured to display the amplitude and the phase of the multi-channel intermediate frequency signal in an image mode.

In the above integrated research and development platform for a terahertz focal plane imaging system, the very large-scale array signal real-time acquisition and processing sub-platform includes an array signal acquisition module, an array signal preprocessing module, and an image processing module. The array signal acquisition module is configured to convert the amplitude and the phase of the multi-channel intermediate frequency signal from the terahertz system test and principle verification sub-platform to a digital signal, and transmit the digital signal to the array signal preprocessing module. The array signal preprocessing module is configured to perform image preprocessing on the digital signal to obtain a preprocessed image, and transmit the preprocessed image to the image processing module. The image processing module is configured to perform image processing on the preprocessed image to obtain the image of the target and the identification result, and transmit the image of the target and the identification result to the terahertz system test and principle verification sub-platform for display.

In the above integrated research and development platform for a terahertz focal plane imaging system, the terahertz system behavior-level simulation and analysis module includes a scene definition unit, a target definition unit, a scene and target behavior model base, a system function definition unit, a system component behavior model base, and a system behavior-level design and optimization unit. The scene definition unit is configured to obtain the application environment parameter and transmit the application environment parameter to the scene and target behavior model base. The target definition unit is configured to obtain the feature parameter of the target and transmit the feature parameter of the target to the scene and target behavior model base. The scene and target behavior model base is configured to obtain a behavior-level simulation target feature parameter and a behavior-level simulation application environment parameter based on the application environment parameter and the feature parameter of the target. The system function definition unit is configured to obtain the terahertz system architecture based on an inputted system operation mode, and transmit the terahertz system architecture to the system component behavior model base. The system component behavior model base is configured to obtain models of the chip, the lens and the integrated front end based on the terahertz system architecture, and transmit the models of the chip, the lens and the integrated front end to the system behavior-level design and optimization unit. The system behavior-level design and optimization unit is configured to perform simulation and optimization on the models of the chip, the lens and the integrated front end to obtain the optimal performance index parameter of the chip, the optimal performance index parameter of the lens and the optimal performance index parameter of the integrated front end.

In the integrated research and development platform for a terahertz focal plane imaging system, the terahertz chip-level simulation and analysis module includes a chip-level collaborative design and optimization unit, a nonlinear device design and optimization unit, and a non-electrically large linear device design and optimization unit. The chip-level collaborative design and optimization unit is configured to receive the optimal performance index parameter of the chip, transmit the optimal performance index parameter of the chip to the nonlinear device design and optimization unit, and model the chip to obtain a nonlinear device physical model and a non-electrically large linear device physical model. The nonlinear device design and optimization unit is configured to obtain a nonlinear device geometric structure parameter and a nonlinear device material parameter based on the optimal performance index parameter of the chip and the nonlinear device physical model, and feed the nonlinear device geometric structure parameter and the nonlinear device material parameter back to the chip-level collaborative design and optimization unit. The non-electrically large linear device design and optimization unit is configured to obtain a non-electrically large linear device geometric structure parameter and a non-electrically large linear device material parameter based on the non-electrically large linear device physical model, and feed the non-electrically large linear device geometric structure parameter and the non-electrically large linear device material parameter back to the chip-level collaborative design and optimization unit. The chip-level collaborative design and optimization unit is configured to obtain an optimized physical model of the terahertz chip based on the nonlinear device geometric structure parameters, the nonlinear device material parameter, the non-electrically large linear device geometric structure parameter and the non-electrically large linear device material parameter, and transmit the optimized physical model of the terahertz chip to the terahertz system-level simulation and analysis module.

In the integrated research and development platform for a terahertz focal plane imaging system, the terahertz component-level simulation and analysis module includes a component-level collaborative design and simulation unit, an electrically large linear component design and optimization unit, and an interconnection structure simulation unit. The component-level collaborative design and simulation unit is configured to receive the optimal performance index parameter of the lens and the optimal performance index parameter of the integrated front-end, transmit a physical model of the lens to the electrically large linear component design and optimization unit and transmit a physical model of a interconnection structure of the integrated front end to the interconnection structure simulation unit. The electrically large linear module design and optimization unit is configured to obtain the geometric structure parameter and the material parameter of the lens based on the optimal performance index parameter of the lens and the physical model of the lens, and feed the geometric structure parameter and the material parameter of the lens back to the component-level collaborative design and simulation unit. The interconnection structure simulation unit is configured to obtain a geometric structure parameter and a material parameter of the interconnection structure based on the optimal performance index parameter of the integrated front end and the physical model of the interconnection structure of the integrated front end, and feed the geometric structure parameter and the material parameter of the interconnection structure back to the component-level collaborative design and simulation unit. The component-level collaborative design and simulation unit is configured to obtain an optimized physical model of the lens based on the geometric structure parameter and the material parameter of the lens, obtain an optimized physical model of the interconnection structure based on the geometric structure parameter and the material parameter of the interconnection structure, and transmit the optimized physical model of the lens and the optimized physical model of the interconnection structure to the terahertz system-level simulation and analysis module.

In the integrated research and development platform for a terahertz focal plane imaging system, the terahertz system-level simulation and analysis module includes a target full-wave simulation unit, a system collaborative simulation unit, a system simulation structure storage unit and a system performance evaluation unit. The target full-wave simulation unit is configured to obtain the feature parameter of the target based on a full-wave analysis method, and transmit the feature parameter of the target to the system collaborative simulation unit. The system collaborative simulation unit is configured to obtain a simulation output signal parameter of the physical model of the integrated front end based on the optimized physical model of the integrated front end and the feature parameter of the target, and transmit the simulation output signal parameter of the physical model of the integrated front end to the system simulation structure storage unit. The system simulation structure storage unit is configured to receive and store the simulation output signal parameter of the physical model of the integrated front end, and transmit the simulation output signal parameter of the physical model of the integrated front end to the very large-scale array signal real-time acquisition and processing sub-platform to obtain the simulation image of the target. The system performance evaluation unit is configured to obtain a system design performance evaluation table of the integrated front end based on the simulation image of the target.

In the above integrated research and development platform for a terahertz focal plane imaging system, the wafer-level precision positioning and environment control module includes a photoelectric shielding and precision micro-environment control unit, a micro-vibration isolation unit, a ultra-fast high-low temperature precision environment control unit, a precision three-dimensional displacement platform automatic positioning unit, a high-resolution digital microscopic imaging unit, a low-temperature frost-free control unit, a three-dimensional dimension measurement evaluation and image processing unit, a micron-level three-dimensional displacement control unit, and a wafer-level precision multi-dimensional calibration unit. The photoelectric shielding and precision microenvironment control unit is configured to provide an optical anechoic chamber environment and an electromagnetic anechoic chamber environment for the terahertz chip. The micro-vibration isolation unit is configured to provide a stable vibration environment for the terahertz chip. The ultra-fast high-low temperature precision environment control unit is configured to provide a stable ambient temperature for the terahertz chip. The low-temperature frost-free control unit is configured to provide a low-temperature and frost-free dry environment for the terahertz chip. The precision three-dimensional displacement platform automatic positioning unit is configured to control a displacement of the terahertz chip. The high-resolution digital microscopic imaging unit is configured to perform microscopic imaging on the terahertz chip and store an image of the terahertz chip. The three-dimensional dimension measurement evaluation and image processing unit is configured to measure a structure on the terahertz chip and output a feature dimension of the structure on the terahertz chip. The micron-level three-dimensional displacement control unit is configured to control a micro-displacement of the terahertz chip to control the terahertz chip to be located in a field of view of the high-resolution digital microscopic imaging unit. The wafer-level precision multi-dimensional calibration unit is configured to provide an on-chip precision calibration film for the terahertz chip to perform on-chip test and calibration on the terahertz chip.

In the above integrated research and development platform for a terahertz focal plane imaging system, the terahertz chip direct current parameter test and characterization module includes a direct current parameter test and analysis unit, a direct current bias voltage excitation and response test unit, an alternating current voltage excitation and response test unit and a pulse excitation and response test unit. The direct current bias voltage excitation and response test unit is configured to obtain an I-V feature parameter of the terahertz chip. The alternating current voltage excitation and response test unit is configured to obtain a C-V feature parameter of the terahertz chip. The pulse excitation and response test unit is configured to obtain a pulse feature parameter of the terahertz chip. The direct current parameter test and analysis unit is configured to obtain the direct current feature of the terahertz chip based on the I-V feature parameter, the C-V feature parameter and the pulse feature parameter.

In the above integrated research and development platform for a terahertz focal plane imaging system, the terahertz chip vector network parameter test and characterization module includes a vector network parameter test and analysis unit, a terahertz frequency expansion module-band N, a contact terahertz signal feed unit, a non-contact terahertz signal feed unit, and a contact terahertz signal feed unit. The vector network parameter test and analysis unit is configured to provide a microwave-band excitation signal. The terahertz frequency expansion module-band N (231N) is configured to perform up-conversion on the microwave-band excitation signal and output the terahertz excitation signal. The terahertz excitation signal is fed to an input port of the terahertz chip through the contact terahertz signal feed unit or the non-contact terahertz signal feed unit. A terahertz signal is outputted by the terahertz chip via an output port of the terahertz chip, and is inputted to the terahertz frequency expansion module-band N through the contact terahertz signal feed unit or the non-contact terahertz signal feed unit. The terahertz frequency expansion module-band N is configured to perform down-conversion on the outputted terahertz signal to obtain a microwave response signal. The microwave response signal is inputted to the vector network parameter test and analysis unit. The vector network parameter test and analysis unit is configured to obtain the vector network parameter of the terahertz chip based on the microwave-band excitation signal and the microwave response signal and output the vector network parameter of the terahertz chip.

In the above integrated research and development platform for a terahertz focal plane imaging system, the terahertz chip feature comprehensive characterization and modeling module includes a chip feature synthesis unit, a pixel consistency analysis unit, and a device modeling and parameter extraction unit. The chip feature synthesis unit is configured to receive the direct current parameter of the terahertz chip and the vector network parameter of the terahertz chip and obtain the feature parameter of the terahertz chip based on the direct current parameter of the terahertz chip and the vector network parameter of the terahertz chip. The pixel consistency analysis unit is configured to obtain consistency of the feature parameter of the terahertz chip based on the feature parameter of the terahertz chip. The device modeling and parameter extraction unit is configured to establish the equivalent network model of the terahertz chip based on consistency analysis data of the feature parameter, extract a parameter of the model, and output the model and the feature parameter of the terahertz chip.

In the integrated research and development platform for a terahertz focal plane imaging system, the high-precision displacement and rotation module includes a seamless reconfigurable quasi-optical platform, a programmable control unit, a high-precision three-dimensional displacement unit, and a micro-radian rotation unit. The seamless reconfigurable quasi-optical platform is configured to fix the terahertz lens to be tested or the terahertz antenna to be tested. The programmable control unit is configured to output a displacement command and a rotation command. The high-precision three-dimensional displacement unit is configured to control the displacement of the terahertz lens to be tested or the displacement of the terahertz antenna to be tested in response to the displacement rotation. The micro-radian rotation unit is configured to control rotation of the terahertz lens to be tested or rotation of the terahertz antenna to be tested in response to the rotation command.

In the above integrated research and development platform for a terahertz focal plane imaging system, the terahertz antenna feature characterization module includes a terahertz time-domain window unit, a terahertz antenna feature analysis unit, and a spatial feature non-uniformity analysis unit. The terahertz time-domain window unit is configured to fill the vector network parameter of the terahertz antenna to be tested to obtain a vector network parameter without multipath effect. The terahertz antenna feature is configured to obtain a radiation pattern and an antenna index parameter of the terahertz antenna based on the vector network parameter without multipath effect. The spatial feature non-uniformity analysis unit is configured to obtain consistency analysis data of the terahertz antenna based on the radiation pattern and the antenna index parameter of the terahertz antenna.

In the integrated research and development platform for a terahertz focal plane imaging system, the terahertz quasi-optical lens feature characterization module includes a broadband network parameter synthesis unit, a terahertz lens feature analysis unit and a terahertz lens material feature analysis unit. The broadband network parameter synthesis unit is configured to obtain a broadband vector network parameter of the terahertz lens to be tested based on the vector network parameter of the terahertz lens to be tested. The terahertz lens feature analysis unit is configured to obtain an ABCD matrix of the terahertz lens to be tested based on the broadband vector network parameter of the terahertz lens to be tested. The terahertz lens material feature analysis unit is configured to obtain the material parameter of the terahertz lens to be tested based on the broadband vector network parameter of the terahertz lens to be tested.

In the integrated research and development platform for a terahertz focal plane imaging system, the terahertz modulation signal generation module includes a programmable modulation waveform generation unit, a microwave signal generation unit, and a terahertz up-conversion unit-band N. The programmable modulation waveform generation unit is configured to generate a modulation wave, and transmit the modulation wave to the high-stability microwave signal generation unit. The microwave signal generation unit is configured to output a microwave signal including the modulation wave. The terahertz up-conversion unit-band N is configured to obtain the terahertz signal including the modulation wave based on the microwave signal including the modulation wave.

In the above integrated research and development platform for a terahertz focal plane imaging system, the channel output signal test module includes a terahertz system output feature record unit, an output spectrum test unit and an output waveform test unit. The output spectrum test unit is configured to obtain a spectrum of the multi-channel intermediate frequency signal, and transmit the spectrum of the multi-channel intermediate frequency signal to the terahertz system output feature record unit. The output waveform test unit is configured to obtain a time-domain waveform of the multi-channel intermediate frequency signal, and transmit the time-domain waveform of the multi-channel intermediate frequency signal to the terahertz system output feature record unit. The terahertz system output feature record unit is configured to obtain the amplitude and the phase of the multi-channel intermediate frequency signal based on the spectrum of the multi-channel intermediate frequency signal and the time-domain waveform of the multi-channel intermediate frequency signal.

In the integrated research and development platform for a terahertz focal plane imaging system, the blind pixel and non-uniformity detection and analysis module includes a blind pixel analysis unit and an array non-uniformity analysis unit. The blind pixel analysis unit is configured to obtain distribution of the blind pixel of the integrated front end based on the amplitude and the phase of the multi-channel intermediate frequency signal. The array non-uniformity analysis unit is configured to obtain the non-uniformity distribution of the integrated front end based on the amplitude and the phase of the multi-channel intermediate frequency signal.

Compared with the conventional technologies, the present disclosure has the following beneficial effects.
(1) According to the present disclosure, the terahertz system behavior-level simulation and analysis module, the terahertz chip-level simulation and analysis module, the terahertz component-level simulation and analysis module and the terahertz system-level simulation and analysis module are effectively integrated, thereby meeting the requirement for efficiently performing a complete process including system architecture design, key component design, system integration design and imaging evaluation.
(2) According to the present disclosure, the wafer-level precision positioning and environment control module, the terahertz chip direct current parameter and characterization module, the terahertz chip vector network parameter test and characterization module and the terahertz chip feature comprehensive characterization and modeling module are effectively integrated, thereby improving the efficiency of testing and characterizing a terahertz focal plane imaging array chip.
(3) According to the present disclosure, the high-precision displacement and rotation module, the terahertz horn antenna module, the terahertz quasi-optical beam transformation module, the terahertz vector network parameter test and characterization module, the terahertz antenna feature characterization module and the terahertz quasi-optical lens feature characterization module are effectively integrated, thereby improving the efficiency of testing and characterizing a terahertz lens.
(4) According to the present disclosure, the terahertz modulation signal generation module, the terahertz horn antenna module, the channel output signal test module, the blind pixel and non-uniformity detection and analysis module and the display module are effectively integrated, thereby improving the efficiency of testing and characterizing a terahertz focal plane imaging system.
(5) According to the present disclosure, the array signal acquisition module, the array signal preprocessing module and the image processing module are effectively integrated, thereby improving the efficiency of signal preprocessing and image processing.
(6) According to the present disclosure, sub-platforms share data through interfaces between the sub-platforms, meeting the research and development requirements of a whole process including chip design, device design, test, system function verification and imaging principle verification, thereby improving the efficiency of developing a terahertz focal plane array imaging system.

### BRIEF DESCRIPTION OF THE DRAWINGS

Those skilled in the art can clearly understand various advantages and benefits by reading the detailed description of the preferred embodiments below. The drawings are used only for showing the preferred embodiments and are not intended to limit the present disclosure. In the drawings, the same reference numerals represent the same components. In the drawings:
Figure 1 is a system block diagram of an integrated design and test platform for a terahertz focal plane array imaging system according to an embodiment of the present disclosure;
Figure 2 is a schematic structural diagram of a terahertz integrated collaborative design and simulation sub-platform according to an embodiment of the present disclosure;
Figure 3 is a schematic structural diagram of a terahertz chip test and modeling sub-platform according to an embodiment of the present disclosure;
Figure 4 is a schematic structural diagram of a terahertz beam test and characterization sub-platform according to an embodiment of the present disclosure;
Figure 5 is a schematic structural diagram of a terahertz system test and principle verification sub-platform according to an embodiment of the present disclosure; and
Figure 6 is a schematic structural diagram of a very large-scale array signal real-time acquisition and processing sub-platform according to an embodiment of the present disclosure.

### DETAILED DESCRIPTION OF EMBODIMENTS

The exemplary embodiments of the present disclosure are described in detail below with reference to the drawings. Although the drawings show the exemplary embodiments of the present disclosure, it should be understood that the present disclosure may be realized in various forms and should not be limited to the embodiments described herein. The embodiments are provided for thorough understanding of the present disclosure and entirely conveying the scope of the disclosure to those skilled in the art. It should be noted that, the embodiments of the present disclosure and features in the embodiments may be in combination with each other as long as there is no conflict. The present disclosure is described in detail hereafter with reference to the drawings and in conjunction with the embodiments.

An integrated research and development platform for a terahertz focal plane imaging system is provided according to the present disclosure. The platform includes a terahertz integrated collaborative design and simulation sub-platform 1, a terahertz chip test and modeling sub-platform 2, a terahertz beam test and characterization sub-platform 3, a terahertz system test and principle verification sub-platform 4 and a very large-scale array signal real-time acquisition and processing sub-platform 5.

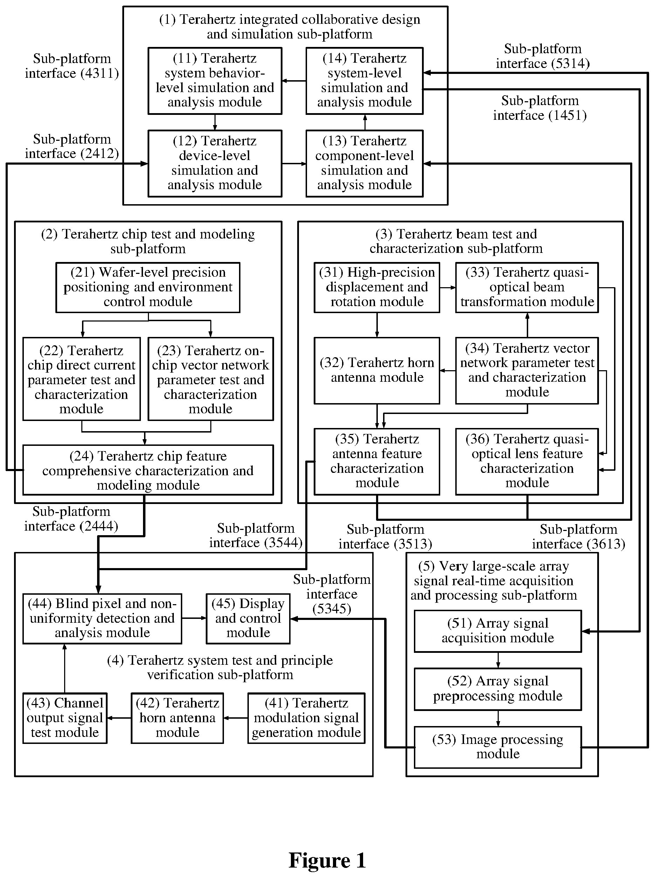

Figure 1 shows a system block diagram of an integrated design and test platform for a terahertz focal plane array imaging system. The terahertz integrated collaborative design and simulation sub-platform 1 includes a terahertz system behavior-level simulation and analysis module 11, a terahertz chip-level simulation and analysis module 12, a terahertz component-level simulation and analysis module 13, and a terahertz system-level simulation and analysis module 14.

The terahertz chip test and modeling sub-platform 2 includes a wafer-level precision positioning and environment control module 21, a terahertz chip direct current parameter test and characterization module 22, a terahertz chip vector network parameter test and characterization module 23, and a terahertz chip feature comprehensive characterization and modeling module 24.

The terahertz beam test and characterization sub-platform 3 includes a high-precision displacement and rotation module 31, a terahertz quasi-optical beam transformation module 32, a terahertz horn antenna module 33, a terahertz vector network parameter test and characterization module 34, a terahertz antenna feature characterization module 35, and a terahertz quasi-optical feature characterization module 36.

The terahertz system test and principle verification sub-platform 4 includes a terahertz modulation signal generation module 41, a terahertz horn antenna module 42, a channel output signal test module 43, a blind pixel and non-uniformity detection and analysis module 44, and a display module 45.

The very large-scale array signal real-time acquisition and processing sub-platform 5 includes an array signal acquisition module 51, an array signal preprocessing module 52, and an image processing module 53.

The terahertz integrated collaborative design and simulation sub-platform 1 obtains an optimal performance index parameter of a terahertz array chip, an optimal performance index parameter of a lens and an optimal performance index parameter of an integrated front end by performing design and optimization based on a system architecture of the terahertz focal plane array imaging system, obtains a geometric structure parameter and a material parameter of the terahertz chip based on the optimal performance index parameter of the terahertz array chip, obtains a geometric structure parameter and a material parameter of the lens based on the optimal performance index parameter of the lens, obtains a geometric structure parameter and a material parameter of the integrated front end based on the optimal performance index parameter of the integrated front end, calculates physical parameter indexes of the chip, the lens and the integrated front end based on the geometric structure parameters and the material parameters of the chip, the lens and the integrated front end, and calculates simulation output data of the system based on the physical parameter indexes, a scene parameter and a target parameter. The simulation output data is transmitted to the very large-scale array signal acquisition and processing sub-platform 5, and the very large-scale array signal acquisition and processing sub-platform 5 outputs a result and a simulation image of the scene and the target.

In the terahertz chip test and modeling sub-platform 2, the terahertz chip is fixed on the wafer-level precision positioning and environment control module 21, a direct current parameter of the terahertz chip is obtained by using the terahertz chip direct current parameter and characterization module 22, a vector network parameter of the terahertz chip is obtained by using the terahertz chip vector network parameter test and characterization module 23, a model and a feature parameter of the terahertz chip is obtained by using the terahertz chip feature comprehensive characterization and modeling module 24 based on the direct current parameter and the vector network parameter of the terahertz chip. The model of the terahertz chip is transmitted to the terahertz integrated collaborative design and simulation sub-platform 1 for optimizing the geometric structure parameter and the material parameter of terahertz chip. The feature parameter of the terahertz chip is transmitted to terahertz system test and principle verification sub-platform 5 as reference data used for blind pixel detection.

In the terahertz beam test and characterization sub-platform 3, a terahertz lens to be tested or a terahertz antenna to be tested is fixed by using the high-precision displacement and rotation module 31, and a displacement and a rotation angle of the terahertz lens to be tested or the terahertz antenna to be tested are controlled by using the high-precision displacement and rotation module 31. The terahertz vector network parameter test and characterization module 34 outputs a terahertz excitation signal via a port 1, and the terahertz horn antenna module 32 emits a terahertz wave freely radiating in space. The terahertz quasi-optical beam transformation module 33 performs polarization transformation and beam separation on the terahertz wave freely radiating in space, and irradiates the terahertz wave after polarization transformation and beam separation on the terahertz lens to be tested or the terahertz antenna to be tested. A terahertz response signal from the terahertz lens to be tested or the terahertz antenna to be tested is received by the terahertz vector network parameter test and characterization module 34 via a port 2. The terahertz vector network parameter test and characterization module 34 obtains the vector network parameter of the terahertz antenna to be tested based on the terahertz signal outputted via the port 1 and the signal received from the terahertz antenna to be tested via the port 2, or obtains the vector network parameter of the terahertz lens to be tested based on the terahertz signal outputted via the port 1 and the signal received from the terahertz lens to be tested via the port 2. The terahertz antenna feature characterization module 35 obtains an antenna test parameter of the terahertz antenna to be tested based on the vector network parameter of the terahertz antenna to be tested. The terahertz quasi-optical lens feature characterization module 36 obtains a lens test parameter of the terahertz lens to be tested based on the vector network parameter of the terahertz lens to be tested. The antenna test parameter and the lens test parameter are transmitted to the terahertz integrated collaborative design and simulation sub-platform 1 as analysis reference data for designing, optimizing, and iterating the terahertz lens and the integrated front end. The antenna test parameter is transmitted to the terahertz system test and principle verification sub-platform 4 as analysis reference data for blind pixel detection.

In the terahertz system test and principle verification sub-platform 4, the terahertz modulation signal generation module 41 generates a terahertz modulation signal. The terahertz modulation signal is converted to a free-space terahertz modulation wave by the terahertz horn antenna module 42, and the terahertz modulation wave is irradiated on the integrated front end to be tested. The terahertz system outputs a multi-channel intermediate frequency signal. The channel output signal test module 43 obtains an amplitude and a phase of the multi-channel intermediate frequency signal. The blind pixel and non-uniformity detection and analysis module 44 obtains a blind pixel and non-uniformity distribution of the integrated front end based on the amplitude and the phase of the multi-channel intermediate frequency signal, the feature parameter of the terahertz chip obtained by the terahertz integrated collaborative design and simulation sub-platform 1, and the antenna test parameter obtained by the terahertz beam test and characterization sub-platform 3. The amplitude and the phase of the multi-channel intermediate frequency signal are displayed in an image mode by using the display module 45. In addition, the amplitude and the phase of the multi-channel intermediate frequency signal are transmitted to the very large-scale array signal real-time acquisition and processing sub-platform 5 for performing signal processing and image processing.

In the very large-scale array signal real-time acquisition and processing sub-platform 5, the array signal acquisition module 51 converts the amplitude and the phase of the multi-channel intermediate frequency signal from the terahertz system test and principle verification sub-platform 4 to a digital signal. The array signal preprocessing module 52 performs image preprocessing on the digital signal, and the image processing module 53 performs image processing on the preprocessed image to obtain an image of the target and an identification result. The image of the target and the identification result are transmitted to the terahertz system test and principle verification sub-platform 4 to be displayed by the display module 45.

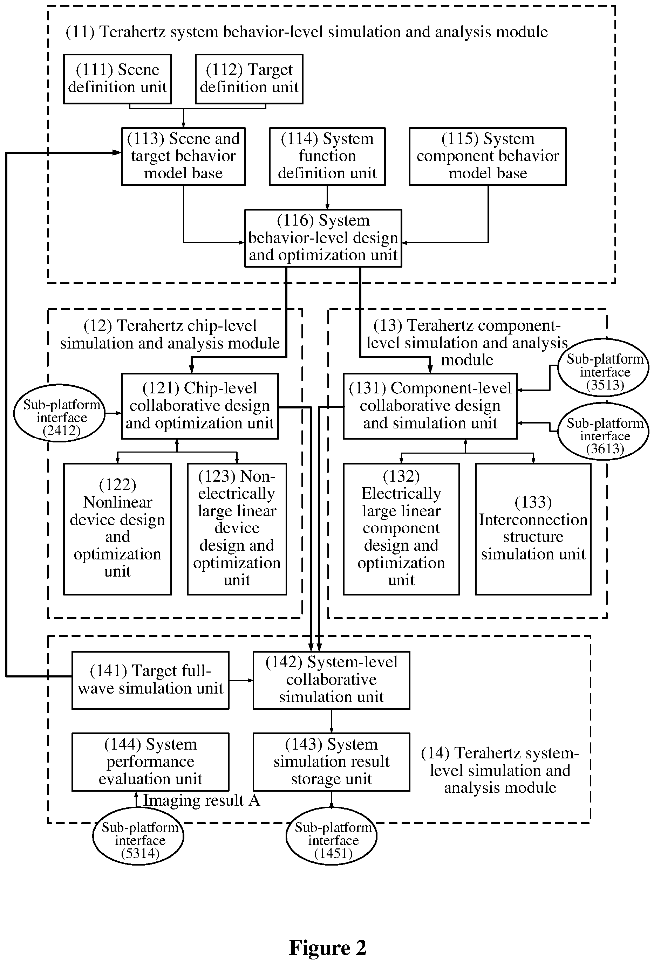

Figure 2 shows a schematic structural diagram of a terahertz integrated collaborative design and simulation sub-platform 1. Based on the sub-platform, design and optimization of the system architecture of the terahertz focal plane array imaging system, design and optimization the terahertz focal plane imaging array chip, design and optimization a terahertz quasi-optical lens group, design and optimization a terahertz integrated front end, and virtual integration and simulation of the terahertz focal plane array imaging system are performed. The sub-platform includes the following four modules: a terahertz system behavior-level simulation and analysis module 11, a terahertz chip-level simulation and analysis module 12, a terahertz component-level simulation and analysis module 13, and a terahertz system-level simulation and analysis module 14.

Based on the terahertz system behavior-level simulation and analysis module 11, the design and optimization of the system architecture of the terahertz focal plane array imaging system are performed. The module includes a scene definition unit 111, a target definition unit 112, a scene and target behavior model base 113, a system function definition unit 114, a system component behavior model base 115, and a system behavior-level design and optimization unit 116. The scene definition unit 111 is configured to define an application environment for the terahertz focal plane imaging system, where the input parameters include a humidity parameter, a temperature parameter, an altitude and the like. The target definition unit 112 is configured to define a parameter of a target to be detected, and the parameter includes a volume of the target, a simplified geometric shape (such as a flat plate, a triangular reflector, a cylinder, an ellipsoid, a paraboloid, and a cone) of the target, an emissivity of a material of the target, a transmittance of the material of the target, a reflectivity of the material of the target material, a distance of the target and the like. The scene and target behavior model base 113 is configured to calculate, based on parameters from the scene definition unit 111 and the target definition unit 112, a parameter required for behavioral-level simulation and analysis of the terahertz system, where the required parameter includes an atmospheric propagation attenuation factor of the terahertz wave, a radar cross-sectional area of the target, an equivalent radiation area of the target, an equivalent brightness temperature of the target and the like. The system function definition unit 114 is configured to define an operation mode of the system, and four operation modes are defined: a passive non-coherent mode, a passive coherent mode, an active non-coherent mode, and an active coherent mode. The system component behavior model base 115 is configured to obtain a mathematical model for each of hardware units included in the terahertz focal plane imaging system, including a behavior-level model of the terahertz array chip, a behavior-level model of the terahertz lens, and other components (including an intermediate frequency filter, an intermediate frequency amplifier and the like) of the terahertz integrated front end. The system behavior-level design and optimization unit 116 is configured to establish a behavior-level model of the terahertz focal plane imaging system by using the system component behavior model base 115, and calculate theoretical output signal data of the behavior-level model of the terahertz focal plane imaging system based on the scene and target behavior model base 113 and the system function definition unit 114. In addition, the system behavior-level design and optimization unit 116 may further optimize an index parameter of the behavior-level model of the terahertz array chip, an index parameter of the behavior-level model of the terahertz lens, and index parameters of other components (including the intermediate frequency filter, the intermediate frequency amplifier and the like) of the terahertz integrated front end based on a neural network algorithm, with ideal output signal data as an optimization target, and taking the best performance indexes that may be achieved based on the components of the terahertz focal plane imaging front end as a boundary condition, and transmit optimized results to the terahertz chip-level simulation and analysis module 12 and the terahertz component-level simulation and analysis module 13 as optimization objectives.

Based on the terahertz chip-level simulation and analysis module 12, the design and optimization of the terahertz focal plane imaging array chip are performed. The terahertz chip-level simulation and analysis module 12 includes a chip-level collaborative design and optimization unit 121, a nonlinear device design and optimization unit 122, a non-electrically large linear device design and optimization unit 123. The chip-level collaborative design and optimization unit 121 calculates and simulates, with a finite element analysis method and a harmonic balance method, performance (including a responsivity, a conversion loss, a noise temperature, and a spatial directivity) of pixels of the terahertz focal plane imaging array chip and isolation between the pixels. An input of the chip-level collaborative design and optimization unit 121 includes geometric models and material feature parameters of components of the terahertz focal plane imaging array chip. An output of the chip-level collaborative design and optimization unit 121 includes performance (including the responsivity, the conversion loss, the noise temperature and the spatial directivity) of the pixels and the isolation between the pixels. The nonlinear device design and optimization unit 122 calculates, with the harmonic balance method and the finite element method, a feature parameter (including a saturation current, an ideal factor, a reverse breakdown voltage and the like) of a nonlinear structure (for example, a Schottky barrier) in the terahertz focal plane imaging array chip. An input of the nonlinear device design and optimization unit 122 includes a material parameter (including a type of a material of an epitaxial layer, a doping concentration of the material, a thickness of the material, and the like) of the epitaxial layer of the chip. An output of the nonlinear device design and optimization unit 122 includes the feature parameter (including the saturation current, the ideal factor, the reverse breakdown voltage, and the like) of the nonlinear structure (for example, the Schottky barrier). The non-electrically large linear device design and optimization unit 123 calculates, with the finite element method, features (including an S parameter, a spatial pattern, and the like) of a non-electrically large linear device, such as an on-chip antenna and a filter, in the terahertz focal plane imaging array chip. An input of the non-electrically large linear device design and optimization unit 123 includes geometric models of the non-electrically large linear device such as the on-chip antenna and the filter, and the material feature parameters of the components. An output of the non-electrically large linear device design and optimization unit 123 includes features (including an S parameter, a spatial pattern, and the like) of the devices. The terahertz chip-level simulation and analysis module 12 may optimize, with a neural network algorithm as a basic optimization algorithm and using the ideal optimal index of the terahertz focal plane imaging system transmitted from the terahertz system behavior-level simulation and analysis module 11 as an optimization objective, the material parameter and the geometric structure of the terahertz focal plane imaging array chip. The optimized terahertz focal plane imaging array chip may be packaged as a terahertz chip-level model to be transmitted to the terahertz system-level simulation and analysis module 14.

Based on the terahertz component-level simulation and analysis module 13, the design and optimization of the terahertz quasi-optical lens group are performed. The terahertz component-level simulation and analysis module 13 includes a component-level collaborative design and simulation unit 131, an electrically large linear component design and optimization unit 132, and an interconnection structure simulation unit 133. The component-level system design and simulation unit 131 is configured to establish models for the terahertz lens group and a terahertz hardware front end passive structure, and calculate S parameters of the terahertz lens group 133 and the terahertz hardware front end passive structure respectively based on the electrically large linear component design and optimization unit 132 and the interconnection structure simulation unit. The electrically large linear component design and optimization unit 132 calculates the S parameter and an electric field distribution of the terahertz lens group by using a fast multipole algorithm, a geometrical optics algorithm and a physical optics algorithm. An input of the electrically large linear component design and optimization unit 132 includes a geometric structure model and a material parameter of the terahertz quasi-optical lens group, and an output of the electrically large linear component design and optimization unit 132 includes the S parameter and the electric field distribution. The interconnection structure simulation unit 133 calculates an S parameter of an interconnection structure (for example, a vertical via) by using the finite element method. An input of the interconnection structure simulation unit 133 includes the geometric structure model and the material parameter of the interconnection structure, and an output of the interconnection structure simulation unit 133 includes the S parameter of the interconnection structure. The terahertz component-level simulation and analysis module 13 may optimize, with the neural network algorithm as a basic optimization algorithm and using the ideal optimal index of the terahertz focal plane imaging system transmitted from the terahertz system behavior-level simulation and analysis module 11 as an optimization object, the geometric structure of the terahertz lens group and the geometric structure of the interconnection structure. The optimized terahertz quasi-optical lens group and the optimized interconnection structure may be respectively packaged as a terahertz component-level model to be transmitted to the terahertz system-level simulation and analysis module 14.

Based on the terahertz system-level simulation and analysis module 14, the design and simulation of the terahertz focal plane imaging hardware front end are performed. The terahertz system-level simulation and analysis module 14 includes a target full-wave simulation unit 141, a system collaborative simulation unit 142, a system simulation structure storage unit 143 and a system performance evaluation unit 144. The target full-wave simulation unit 141 calculates a radar cross-sectional area and an equivalent radiation area of the target to be detected by using the finite element algorithm, the fast multipole algorithm, the geometrical optics algorithm and the physical optics algorithm. An output of the target full-wave simulation unit 141 includes a geometric structure, a material parameter of the target, the radar cross-sectional area and the equivalent radiation area of the target. In addition, the output is transmitted to the scene and target behavior model base 113 for modifying a model of the target in the model base. The system collaborative simulation unit 142 calculates results outputted via channels of the terahertz focal plane imaging front end by using the finite element algorithm, the fast multipole algorithm, the geometrical optics algorithm, the physical optics algorithm and the harmonic balance algorithm. The results are transmitted to the system simulation result storage unit 143. A sub-platform structure is arranged between the system simulation result storage unit 143 and the very large-scale array signal acquisition and processing sub-platform 5, and the sub-platform structure is configured to transmit data to the array signal acquisition module 51. The image processing module 53 calculates an imaging result A and transmits the imaging result A via an interface 5313 of the sub-platform to the system performance evaluation unit 144 for design and evaluation. In a case that the target and the background are displayed and distinguished based on the imaging result A, design requirements are met.

In the terahertz system behavior-level simulation and analysis module 11, the scene definition unit 111 obtains the application environment parameter, the target definition unit 112 obtains the feature parameter of the target, and the scene and target behavior model base 113 obtains the behavior-level simulation target feature parameter and the behavior-level simulation application environment parameter based on the application environment parameter and the feature parameter of the target. The system function definition unit 114 outputs a terahertz system architecture based on the inputted system operation mode. Based on the terahertz system architecture, models of the required chip, lens and integrated front end are obtained from the system component behavior model base 115. The system behavior-level design and optimization unit 116 performs simulation and optimization on the models of the chip, the lens and the integrated front end to obtain the optimal performance index parameter of the chip, the optimal performance index parameter of the lens, and the optimal performance index parameter of the integrated front end.

The optimal performance index parameter of the chip is inputted to the chip-level collaborative design and optimization unit 121. The chip-level collaborative design and optimization unit 121 models the chip to obtain a nonlinear device physical model and a non-electrically large linear device physical model of a. The nonlinear device design and optimization unit 122 performs design and optimization on the nonlinear device physical model based on the optimal performance index parameter of the chip to obtain a nonlinear device geometric structure parameter and a nonlinear device material parameter, and feeds the nonlinear device geometric structure parameter and the nonlinear device material parameter back to the chip-level collaborative design and optimization unit 121. The non-electrically large linear device design and optimization unit 123 performs design and optimization on the non-electrically large linear device physical model to obtain a non-electrically large linear device geometric structure parameter and a non-electrically large linear device material parameter, and feeds the non-electrically large linear device geometric structure parameter and the non-electrically large linear device material parameter back to the chip-level collaborative design and optimization unit 121. Finally, the chip-level collaborative design and optimization unit 121 obtains an optimized physical model of the terahertz chip and transmits the optimized physical model of the terahertz chip to the system-level collaborative simulation unit 142.

The optimal performance index parameter of the lens and the optimal performance index parameter of the integrated front end are inputted to the component-level collaborative design and simulation unit 131. The component-level collaborative design and simulation unit 131 transmits the physical model of the lens to the electrically large linear component design and optimization unit 132, and transmits the physical model of the interconnection structure of the integrated front end to the interconnection structure simulation unit 133. The electrically large linear component design and optimization unit 132 performs optimization and design on the physical model of the lens based on the optimal performance index parameter of the lens to obtain a geometric structure parameter and a material parameter of the lens, and feeds the geometric structure parameter and the material parameter of the lens back to the component-level collaborative design and simulation unit 131. The interconnection structure simulation unit 133 performs optimization and design on the interconnection structure of the integrated front end based on the optimal performance index parameter of the integrated front end to obtain a geometric structure parameter and a material parameter of the interconnection structure, and feeds the geometric structure parameter and the material parameter of the interconnection structure back to the component-level collaborative design and simulation unit 131. Finally, the component-level collaborative design and simulation unit 131 obtains an optimized physical model of the lens and an optimized physical model of the interconnection structure, and transmits the optimized physical models to the system-level collaborative simulation unit 142.

The system-level collaborative simulation unit 142 establishes a physical model of the integrated front end based on the optimized physical model of the terahertz chip, the optimized physical model of the lens, and the optimized physical model of the interconnection structure. The system-level collaborative simulation unit 142 obtains a simulation output signal parameter of the physical model of the integrated front end based on the feature parameter of the target obtained by the target full-wave simulation unit 141 using a full-wave analysis method. The simulation output signal parameter is stored in the system simulation result storage unit 143 and is transmitted to the array signal acquisition module 51. The array signal acquisition module 51 converts the simulation output signal parameter to a simulation output digital signal parameter. The simulation output digital signal parameter is sequentially processed by the array signal preprocessing module 52 and the image processing module 53 to obtain a simulation image of the target. The system performance evaluation unit 144 obtains a system design performance evaluation table based on the simulation image of the target.

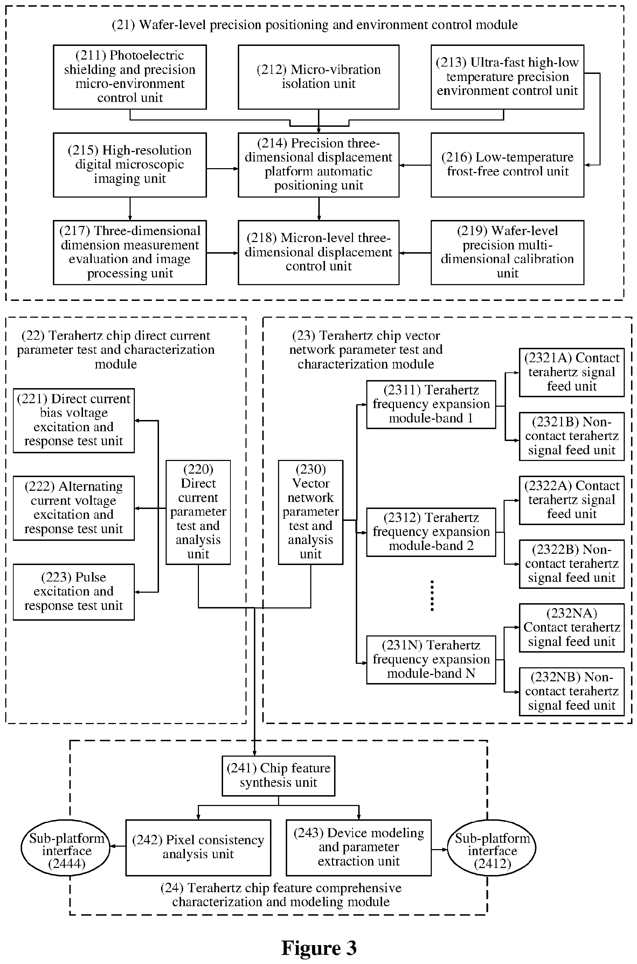

Figure 3 shows a schematic structural diagram of a terahertz chip test and modeling sub-platform 2. Based on the sub-platform, testing of the terahertz focal plane imaging array chip and modeling of a device on the chip are performed. The sub-platform includes four models: a wafer-level precision positioning and environment control module 21, a terahertz chip direct current parameter and characterization module 22, a terahertz chip vector network parameter test and characterization module 23, and a terahertz chip feature comprehensive characterization and modeling module 24.

The wafer-level precision positioning and environment control module 21 is configured to position the terahertz focal plane imaging array chip and provide an environment at a temperature for the terahertz focal plane imaging array chip. The wafer-level precision positioning and environment control module 21 includes a photoelectric shielding and precision micro-environment control unit 211, a micro-vibration isolation unit 212, a ultra-fast high-low temperature precision environment control unit 213, a precision three-dimensional displacement platform automatic positioning unit 214, a high-resolution digital microscopic imaging unit 215, a low-temperature frost-free control unit 216, a three-dimensional dimension measurement evaluation and image processing unit 217, a micron-level three-dimensional displacement control unit 218, and a wafer-level precision multi-dimensional calibration unit 219. The photoelectric shielding and precision microenvironment control unit 211 provides an optical and electromagnetic darkroom environment for the terahertz focal plane imaging array chip. In the optical and electromagnetic darkroom environment, shielded electromagnetic interference is not less than 20dB, noise is not greater than -170dBVrms/rtHz (≤1MHz), and attenuation of light is not less than 120dB. The micro-vibration isolation unit 212 provides a stable vibration environment for the terahertz focal plane imaging array chip. In the stable vibration environment, isolation of vibration reaches an air-floating six-degree-of-freedom sub-hertz level and is not less than 20dB. The ultra-fast high-low temperature precision environment control unit 213 provides a stable ambient temperature for the terahertz focal plane imaging array chip. The temperature is controlled to range from -60°C to 300°C, the uniformity of the temperature is not greater than 0.5°C, and a resolution of controlling the temperature is greater than 0.1°C. The precision three-dimensional displacement platform automatic positioning unit 214 is configured to control the position of the terahertz focal plane imaging array chip. The high-resolution digital microscopic imaging unit 215 is configured to perform microscopic imaging on the terahertz focal plane imaging array chip. The high-resolution digital microscopic imaging unit 215 may perform image processing and observation on a micro structure of the chip and observe the micro-structure, may perform image processing and enlarging on a single or multiple observation points at different magnifications. The high-resolution digital microscopic imaging unit 215 may store the image of the chip. The low-temperature frost-free control unit 216 is configured to provide a low-temperature and frost-free dry environment for the terahertz focal plane imaging array chip. The three-dimensional dimension measurement evaluation and image processing unit 217 is configured to measure a structure on the terahertz focal plane imaging array chip at a resolution of a submicron level. The three-dimensional dimension measurement evaluation and image processing unit 217 may measure the height of the structure on the chip. The micron-level three-dimensional displacement control unit 218 is configured to control a micro-displacement of the terahertz focal plane imaging array chip, and the resolution of controlling the displacement is greater than 1µm. The wafer-level precision multi-dimensional calibration unit 219 is configured to provide an on-chip precision calibration film for the terahertz focal plane imaging array chip.

The terahertz chip direct current parameter test and characterization module 22 is configured to test a direct current parameter feature of a semiconductor device, such as a terahertz Schottky diode and a terahertz high electron mobility transistor, on the terahertz focal plane imaging array chip, characterize a forward and reverse bias feature a saturation feature of the semiconductor device, and features of a junction capacitance and a series resistor, and perform pulse transient response test. The terahertz chip direct current parameter test and characterization module 22 includes a direct current parameter test and analysis unit 220, a direct current bias voltage excitation and response test unit 221, an alternating current voltage excitation and response test unit 222 and a pulse excitation and response test unit 223. The direct current parameter test and analysis unit 220 is configured to calculate a cascade resistance, a saturation current, an ideal factor, a reverse breakdown voltage, a junction capacitance and the like of the semiconductor device based on test data. The direct current bias voltage excitation and response test unit 221 is configured to test a direct current feature of the semiconductor device, where a minimum current measurement resolution is better than 10fA and a minimum voltage measurement resolution is better than 1uV. The alternating current voltage excitation and response test unit 222 is configured to test a low-frequency alternating current feature of the semiconductor device, where a minimum current measurement resolution is better than 10fA and a minimum voltage measurement resolution is better than 1uV. The pulse excitation and response test unit 223 is configured to test a pulse response of the semiconductor device, where a minimum sampling interval of the test is not greater than 5ns. The pulse excitation and response test unit 223 has a function of editing arbitrary waveforms, thereby performing ultrafast pulse measurement, transient pulse measurement and pulse volt-ampere feature measurement.

The terahertz chip vector network parameter test and characterization module 23 is configured to test an S-parameter feature of a device on the terahertz focal plane imaging array chip. The terahertz chip vector network parameter test and characterization module 23 includes a vector network parameter test and analysis unit 230, a terahertz frequency expansion module-band 1 2311, a terahertz frequency expansion module-band 2 2312, ... , and a terahertz frequency expansion module-band N 231N. Generally, the terahertz frequency expansion module-band N 231N is connected with a contact terahertz signal feed unit 232NA or a non-contact terahertz signal feed unit 232NB. A maximum frequency at which the vector network parameter test and analysis unit 230 operates is not less than 40GHz. An input port and an output port of the vector network parameter test and analysis unit 230 are coaxial ports. The vector network parameter test and analysis unit 230 may obtain a vector network parameter of a device. The vector network parameter test and analysis unit 230 is arranged with a built-in Bias-T. The vector network parameter test and analysis unit 230 has a dynamic range not less than 100dB, an amplitude stability within ±0.05dB/°C, and a phase stability within ±0.5°/°C. The terahertz frequency expansion module-band N 231N is configured to up-convert a band to be tested to a terahertz band such as a band from 220GHz to 330GHz, and a dynamic range is not less than 80dB. The contact terahertz signal feed unit 232NA has a "ground-signal-ground" probe structure, and the non-contact terahertz signal feed unit 232NB has a lens structure.

The terahertz chip feature comprehensive characterization and modeling module 24 is configured to synthesize the direct current parameter obtained by the terahertz chip direct current parameter and characterization module 22 and the vector network parameter obtained by the terahertz chip vector network parameter test and characterization module 23, analyze consistency of pixels of the terahertz focal plane imaging array chip, establish a model for a semiconductor device, and obtain a parameter of the semiconductor device. The terahertz chip feature comprehensive characterization and modeling module 24 includes a chip feature synthesis unit 241, a pixel consistency analysis unit 242, a device modeling and parameter extraction unit 243. The chip feature synthesis unit 241 is configured to synthesize the direct current parameter and the vector network parameter of the device. The pixel consistency analysis unit 242 adopts a Kappa consistency test method, and transmits a result to a blind pixel and non-uniformity detection and analysis module 44 in the terahertz system test and principle verification sub-platform 4 via a sub-platform interface 2444. The device modeling and parameter extraction unit 243 adopts a modeling method based on a small signal vector network parameter, and transmits a result to the terahertz device-level simulation and analysis module 12 in the terahertz integrated collaborative design and simulation sub-platform 1 via a sub-platform interface 2412.

In the terahertz chip test and modeling sub-platform 2, the terahertz chip is fixed on the wafer-level precision positioning and environment control module 21. The terahertz chip direct current parameter and characterization module 22 obtains the direct current parameter of the terahertz chip. The terahertz chip vector network parameter test and characterization module 23 obtains the vector network parameter of the terahertz chip. The terahertz chip feature comprehensive characterization and modeling module 24 obtains the model and the feature parameter of the terahertz chip based on the direct current parameter of the terahertz chip and the vector network parameter of the terahertz chip. The model of the terahertz chip is transmitted to the terahertz integrated collaborative design and simulation sub-platform 1 for optimizing the geometric structure parameter and the material parameter of terahertz chip. The feature parameter of the terahertz chip is transmitted to terahertz system test and principle verification sub-platform 5 as the evaluation reference data used for blind pixel detection.

In the terahertz chip test and modeling sub-platform 2, the terahertz chip is fixed on the wafer-level precision positioning and environment control module 21. The photoelectric shielding and precision micro-environment control unit 211 provides an optical and electromagnetic darkroom environment for the terahertz chip. The micro-vibration isolation unit 212 provides a stable vibration environment for the terahertz chip. The ultra-fast high-low temperature precision environment control unit 213 provides a stable ambient temperature for the terahertz chip. The low-temperature frost-free control unit 216 provides a low temperature and frost-free dry environment for the terahertz chip. The precision three-dimensional displacement platform automatic positioning unit 214 controls a displacement of the terahertz chip. The high-resolution digital microscopic imaging unit 215 performs microscopic imaging on the terahertz chip, and stores the image of the chip. The three-dimensional dimension measurement evaluation and image processing unit 217 measures a structure on the terahertz chip, and outputs a feature dimension of the structure on the terahertz chip. The micron-level three-dimensional displacement control unit 218 controls a micro-displacement of the terahertz chip to control the terahertz chip to be located in the field of view of the high-resolution digital microscopic imaging unit 215. The wafer-level precision multi-dimensional calibration unit 219 provides an on-chip precision calibration film for the terahertz chip to perform on-chip test and calibration of the terahertz chip.

The terahertz chip direct current parameter and characterization module 22 performs measurement to obtain a direct current parameter of the terahertz chip. The direct current bias voltage excitation and response test unit 221 tests a direct current feature of the terahertz chip to output an I-V feature parameter. The alternating current voltage excitation and response test unit 222 tests a low-frequency alternating current feature of the terahertz chip to output a C-V feature parameter. The pulse excitation and response test unit 223 tests a pulse response of the terahertz chip to output a pulse feature parameter. The I-V feature parameter, the C-V feature parameter and the pulse feature parameter are fed back to the direct current parameter test and analysis unit 220, and the direct current parameter test and analysis unit 220 outputs a direct current feature of the terahertz chip.

The terahertz chip vector network parameter test and characterization module 23 performs measurement to obtain a vector network parameter of the terahertz chip. The vector network parameter test and analysis unit 230 provides a microwave-band excitation signal. The terahertz frequency expansion module-band N231N performs up-conversion on the microwave-band excitation signal to output a terahertz excitation signal. The terahertz excitation signal is fed to the input port of the terahertz chip through the contact terahertz signal feed unit 232NA or the non-contact terahertz signal feed unit 232NB. A terahertz signal is outputted by the terahertz chip via the output port of the terahertz chip, and is inputted to the terahertz frequency expansion module-band N 231N through the contact terahertz signal feed unit 232NA or the non-contact terahertz signal feed unit 232NB. The terahertz frequency expansion module-band N231N performs down-conversion on the outputted terahertz signal to obtain a microwave response signal. The microwave response signal is inputted to the vector network parameter test and analysis unit 230. The vector network parameter test and analysis unit 230 obtains the vector network parameter of the terahertz chip based on the microwave-band excitation signal and the microwave response signal.

The terahertz chip feature comprehensive characterization and modeling module 24 obtains a model and a feature parameter of the terahertz chip based on the direct current parameter of the terahertz chip and the vector network parameter of the terahertz chip. The direct current parameter of the terahertz chip and the vector network parameter of the terahertz chip are inputted to the chip feature synthesis unit 241 to obtain a feature parameter of the terahertz chip. The pixel consistency analysis unit 242 analyzes consistency of the feature parameter of the terahertz chip based on the feature parameter of the terahertz chip to output consistency analysis data of the feature parameter. The device modeling and parameter extraction unit 243 establishes an equivalent network model of the terahertz chip based on the consistency analysis data of the feature parameter, extracts a parameter of the model, and outputs the model and the feature parameter of the terahertz chip.

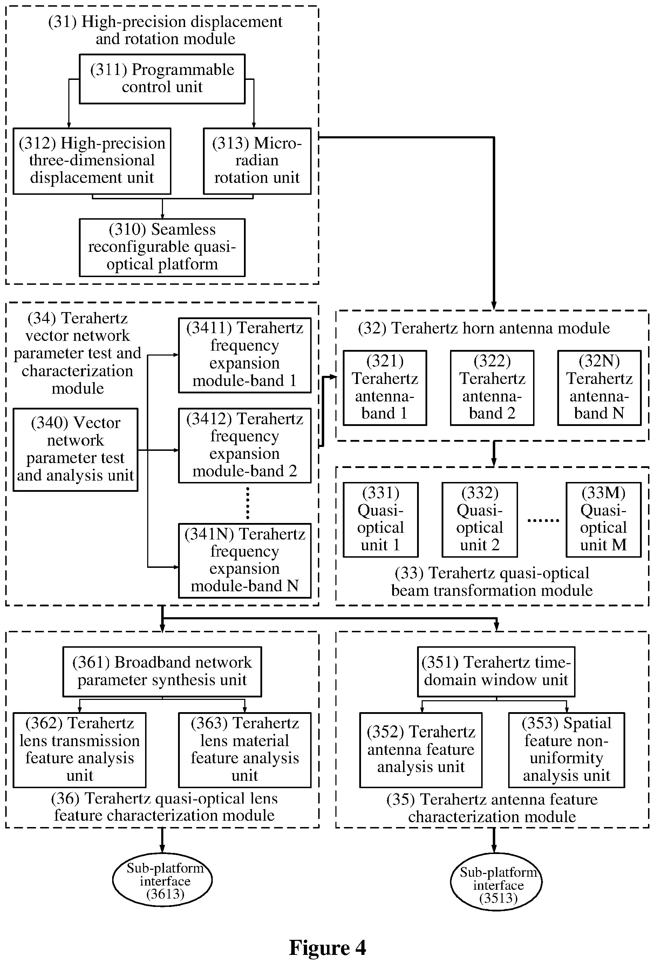

Figure 4 shows a schematic structural diagram of a terahertz beam test and characterization sub-platform 3. Based on the sub-platform, spatial beam features of the terahertz quasi-optical lens and the terahertz antenna are obtained. The sub-platform includes a high-precision displacement and rotation module 31, a terahertz horn antenna module 32, a terahertz quasi-optical beam transformation module 33, a terahertz vector network parameter test and characterization module 34, a terahertz antenna feature characterization module 35 and a terahertz quasi-optical lens feature characterization module 36.

The high-precision displacement and rotation module 31 is configured to provide a high-precision positioning and displacement environment for the terahertz quasi-optical lenses and the terahertz antenna. The high-precision displacement and rotation module 31 includes a seamless reconfigurable quasi-optical platform 310, a programmable control unit 311, a high-precision three-dimensional displacement unit 312, and a micro-radian rotation unit 313. The seamless reconfigurable quasi-optical platform 310 is configured to provide an environment for testing the terahertz quasi-optical lens and the terahertz antenna. With the seamless reconfigurable quasi-optical platform 310, multiple quasi-optical platforms may be seamlessly spliced, assembled, and disassembled, and a horizontal desktop is provided, where the desktop has a flatness not greater than 0.05mm/m², has a characterization roughness not greater than 1µm, and has an amplitude is not greater than 2µm. The programmable control unit 311 is configured to provide control signals for the high-precision three-dimensional displacement unit 312 and the micro-radian rotation unit 313, and have a function of programming and controlling a motion base function. The high-precision three-dimensional displacement unit 312 is configured to perform high-precision displacement on the terahertz quasi-optical lens and the terahertz horn antenna, where a minimum displacement precision is greater than 5nm. The micro-radian rotation unit 313 is configured to perform high-precision rotation on the terahertz quasi-optical lens and the terahertz horn antenna, where a resolution is better than 0.001°.

Terahertz horn antenna module 32 is configured to generate a spatial terahertz wave. The terahertz horn antenna module 32 includes terahertz horn antennas corresponding to N bands. The terahertz horn antennas are recorded as terahertz antenna-band N 32N.

The terahertz quasi-optical beam transformation module 33 is configured to perform spatial transformation on a terahertz beam. The terahertz quasi-optical beam transformation module 33 includes M quasi-optical units, such as a lens and a beam splitter. The M quasi-optical units are recorded as quasi-optical unit M 33M.

The terahertz vector network parameter test and characterization module 34 is configured to test the S-parameter feature of the terahertz quasi-optical lens. The terahertz vector network parameter test and characterization module 34 includes a vector network parameter test and analysis unit 340 and terahertz frequency expansion modules corresponding to N bands. The terahertz frequency expansion modules are recorded as terahertz frequency expansion module-band N 341N. A maximum frequency at which the vector network parameter test and analysis unit 340 operates is not less than 40GHz. The input port and the output port of the vector network parameter test and analysis unit 340 are coaxial ports. The vector network parameter test and analysis unit 3400 may obtain a vector network parameter of a device. The vector network parameter test and analysis unit 340 has a dynamic range not less than 100dB, an amplitude stability within ±0.05dB/°C, and a phase stability within ± 0.5°/°C. The terahertz frequency expansion module-band N 341N is configured to up-convert the band to be tested to a terahertz band such as a band from 325GHz to 500GHz, and a dynamic range is not less than 80dB.

The terahertz antenna feature characterization module 35 is configured to analyze, based on the vector network parameter, a spatial direction feature of an antenna structure such as an on-chip antenna of the terahertz chip and a micro-lens integrated antenna in a microsystem, and analyze consistency of an antenna array. The terahertz antenna feature characterization module 35 includes a terahertz time-domain window unit 351, a terahertz antenna feature analysis unit 352, and a spatial feature non-uniformity analysis unit 353. The terahertz time-domain window unit 351 may define a terahertz time-domain window for filtering out multipath effect. The terahertz antenna feature analysis unit 352 analyzes a radiation pattern of the terahertz antenna based on the vector network parameter, and outputs key analysis indicators including a beam width and a sidelobe level and the like. The spatial feature non-uniformity analysis unit 353 analyzes, based on the vector network parameter, consistency of directionalities of pixel antennas of the terahertz focal plane imaging array chip with the Kappa consistency test method.

The terahertz quasi-optical lens feature characterization module 36 is configured to analyze the transmission feature and the material feature of the lens based on the terahertz linear vector network parameter. The terahertz quasi-optical lens feature characterization module 36 includes a broadband network parameter synthesis unit 361, a terahertz lens feature analysis unit 362 and a terahertz lens material feature analysis unit 363. The broadband network parameter synthesis unit 361 synthesizes S parameters of band 1, band 2, ... , and band N based on frequences to obtain a broadband S parameter, and transmits the broadband S parameter to the terahertz lens feature analysis unit 362 and the terahertz lens material feature analysis unit 363.

The terahertz beam test and characterization sub-platform 3 fixes the terahertz lens to be tested or the terahertz antenna to be tested and controls a displacement and a rotation angle of the terahertz lens to be tested or a displacement and a rotation angle of the terahertz antenna to be tested by using the high-precision displacement and rotation module 31. The terahertz lens to be tested or the terahertz antenna to be tested is fixed on the seamless reconfigurable quasi-optical platform 310. A displacement parameter or a rotation parameter is inputted to the programmable control unit 311, and the programmable control unit 311 outputs a displacement command and a rotation command. The high-precision three-dimensional displacement unit 312 controls the displacement of the terahertz lens to be tested or the displacement of the terahertz antenna to be tested in response to the displacement rotation. The micro-radian rotation unit 313 controls rotation of the terahertz lens to be tested or rotation of the terahertz antenna to be tested in response to the rotation command.

The terahertz vector network parameter test and characterization module 34 performs measurement to obtain a test parameter of the terahertz lens to be tested or a test parameter of the terahertz antenna to be tested. The vector network parameter test and analysis unit 340 provides a microwave-band excitation signal. The microwave-band excitation signal is up-converted by the terahertz frequency expansion module-band N 341N, and the terahertz frequency expansion module-band N 341N outputs a terahertz excitation signal. The terahertz horn antenna module 32 emits a terahertz wave radiating freely in space based on the terahertz excitation signal. The terahertz quasi-optical beam transformation module 33 performs polarization transformation and beam separation on the terahertz wave radiating freely in space, and irradiates the terahertz wave on the terahertz lens to be tested or the terahertz antenna to be tested. A signal outputted by the terahertz lens to be tested or the terahertz antenna to be tested is received by the terahertz horn antenna module 32, and then is down-converted to a microwave band by the terahertz frequency expansion module-band N341N. The terahertz frequency expansion module-band N341N outputs a microwave response signal. The microwave response signal is inputted to the vector network parameter test and analysis unit 230. The vector network parameter test and analysis unit 340 outputs a vector network parameter of the terahertz lens to be tested or a vector network parameter of the terahertz antenna to be tested based on the microwave-band excitation signal and the microwave response signal.

The terahertz antenna feature characterization module 35 outputs an antenna test parameter of the terahertz antenna to be tested based on the vector network parameter of the terahertz antenna to be tested. The vector network parameter of the terahertz antenna to be tested is inputted to the terahertz time-domain window unit 351 to filter out multipath effect, and a filtered vector network parameter is outputted. The terahertz antenna feature 352 outputs a radiation pattern and an index parameter of the terahertz antenna based on the filtered vector network parameter. The spatial feature non-uniformity analysis unit 353 outputs consistency analysis data of the terahertz antenna based on the radiation pattern and the index parameter of the terahertz antenna.

The terahertz quasi-optical lens feature characterization module 36 outputs a lens test parameter of the terahertz lens to be tested based on the vector network parameter of the terahertz lens to be tested. The vector network parameter of the terahertz lens to be tested is inputted to the broadband network parameter synthesis unit 361, and the broadband network parameter synthesis unit 361 outputs a broadband vector network parameter of the terahertz lens to be tested. The terahertz lens feature analysis unit 362 outputs an ABCD matrix of the terahertz lens to be tested based on the broadband vector network parameter of the terahertz lens to be tested. The terahertz lens material feature analysis unit 363 outputs a material parameter of the terahertz lens to be tested based on the broadband vector network parameter of the terahertz lens to be tested.

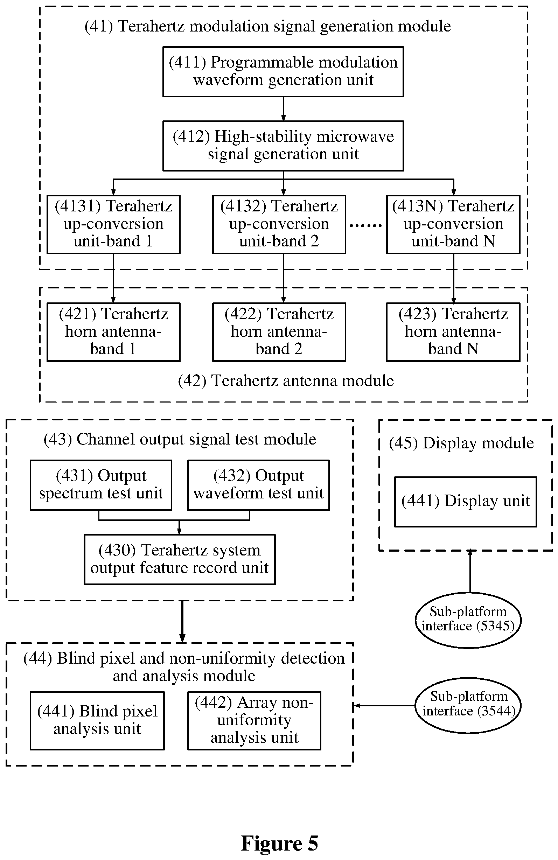

Figure 5 shows a schematic structural diagram of a terahertz system test and principle verification sub-platform 4. Based on the sub-platform, the terahertz focal plane imaging system is tested and an imaging principle verification experiment is performed. The sub-platform includes following five modules: a terahertz modulation signal generation module 41, a terahertz horn antenna module 42, a channel output signal test module 43, a blind pixel and non-uniformity detection and analysis module 44 and a display module 45.

The terahertz modulation signal generation module 41 is configured to provide a terahertz modulation signal for the terahertz focal plane imaging system. The terahertz modulation signal generation module 41 includes a programmable modulation waveform generation unit 411, a high-stability microwave signal generation unit 412, and terahertz up-conversion units respectively corresponding to N bands. The terahertz up-conversion units respectively corresponding to N bands are recorded as terahertz up-conversion unit-band N 413N. The programmable modulation waveform generation unit 411 is configured to generate a modulation wave having a resolution not less than 12 bits and having a sampling rate not less than 12GSa/S. The high-stability microwave signal generation unit 412 is configured to generate a stable microwave signal having a maximum frequency not less than 40GHz and having a harmonic suppression not greater than -55dBc. The terahertz up-conversion unit-band N 413N is configured to up-convert the microwave signal generated by the high-stability microwave signal generation unit 412 to the terahertz band, such as a band from 220GHz to 330GHz.

Terahertz horn antenna module 42 is configured to generate a spatial terahertz wave. The terahertz horn antenna module 42 includes terahertz horn antennas corresponding to N bands. The terahertz horn antennas are recorded as terahertz antenna-band N 42N, corresponding to the terahertz up-conversion unit-band N 413N.

The channel output signal test module 43 is configured to test an output spectrum and an output waveform of the terahertz focal plane imaging system. The channel output signal test module 43 includes a terahertz system output feature record unit 430, an output spectrum test unit 431 and an output waveform test unit 432. The terahertz system output feature record unit 430 is configured to process data from the output spectrum test unit 431 and the output waveform test unit 432, and to transmit the data to the blind pixel and non-uniformity detection and analysis module 44.

The blind pixel and non-uniformity detection and analysis module 44 is configured to analyze consistency of the blind pixels and channels of the terahertz focal plane imaging system based on the data from the channel output signal test module 43. The blind pixel and non-uniformity detection and analysis module 44 includes a blind pixel analysis unit 441 and an array non-uniformity analysis unit 442.

The display module 45 is configured to display an image and a result of the terahertz focal plane imaging system.

The terahertz system test and principle verification sub-platform 4 generates a terahertz modulation signal by using the terahertz modulation signal generation module 41. The programmable modulation waveform generation unit 411 generates a modulation wave and transmits the modulation wave to the high-stability microwave signal generation unit 412. The microwave signal generation unit 412 outputs a microwave signal including the modulation wave. The microwave signal including the modulation wave is inputted to the terahertz up-conversion unit-band N413N, and the terahertz up-conversion unit-band N413N outputs a terahertz signal including the modulation wave.

The channel output signal test module 43 obtains an amplitude and a phase of the multi-channel intermediate frequency signal. The output spectrum test unit 431 obtains a spectrum of the multi-channel intermediate frequency signal and feeds the spectrum of the multi-channel intermediate frequency signal back to the terahertz system output feature record unit 430. The output waveform test unit 432 obtains a time-domain waveform of the multi-channel intermediate frequency signal and feeds the time-domain waveform back to the terahertz system output feature record unit 430. The terahertz system output feature record unit 430 outputs the amplitude and the phase of the multi-channel intermediate frequency signal based on the spectrum of the multi-channel intermediate frequency signal and the time-domain waveform of the multi-channel intermediate frequency signal.

The blind pixel analysis unit 441 obtains distribution the blind pixel of the integrated front end based on the amplitude and the phase of the multi-channel intermediate frequency signal. The array non-uniformity analysis unit 442 obtains a non-uniformity distribution of the integrated front end based on the amplitude and the phase of the multi-channel intermediate frequency signal.

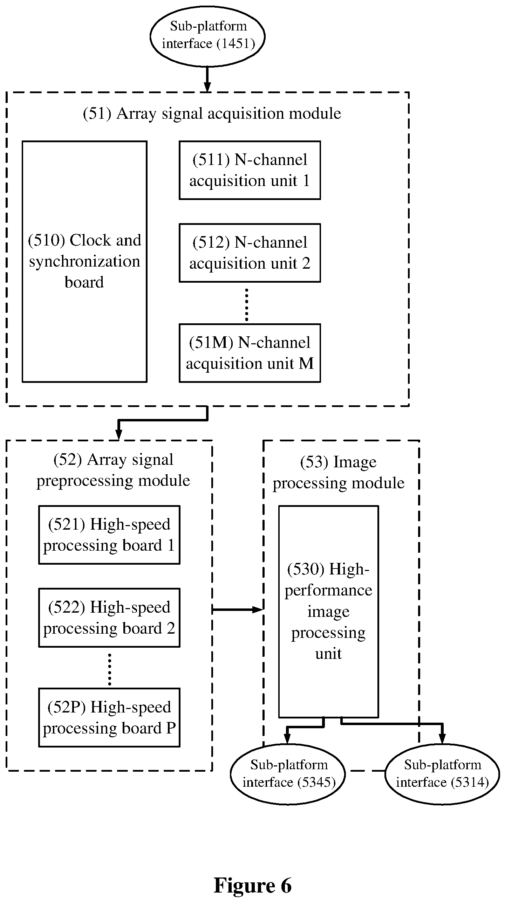

Figure 6 shows a schematic structural diagram of a very large-scale array signal real-time acquisition and processing sub-platform 5. Based on the sub-platform, an algorithm for the terahertz focal plane imaging system is studied. The sub-platform includes the following three modules: an array signal acquisition module 51, an array signal preprocessing module 52 and an image processing module 53.

The array signal acquisition module 51 is configured to provide a synchronous acquisition clock and a synchronous trigger signal, perform time alignment on the array signal, and convert an analog signal to a digital signal. The array signal acquisition module 51 includes a clock, a synchronization board 510, and M N-channel acquisition units. The M N-channel acquisition units are recorded as N-channel acquisition unit 51M, and may process M*N channels simultaneously.

The array signal preprocessing module 52 is configured to perform image preprocessing. The array signal preprocessing module 52 includes P high-speed processing boards that are recorded as high-speed processing board P 52P.

Based on the image processing module 53, an imaging algorithm is studied. The image processing module 53 includes a high-performance image processing unit 530. An image outputted from the image processing module 53 is transmitted to the display and control module 45 via a sub-platform interface 5345 and transmitted to the terahertz system-level simulation and analysis module 14 via a sub-platform 5314.

The above embodiments are only preferred embodiments of the present disclosure. All variations and substitutions made by those skilled in the art within the scope of the technical solutions of the present disclosure should be included in the protection scope of the present invention as defined by the appended claims.

## Claims

1. An integrated research and development platform for a terahertz focal plane imaging system, comprising a terahertz integrated collaborative design and simulation sub-platform (1), a terahertz chip test and modeling sub-platform (2), a terahertz beam test and characterization sub-platform (3), a terahertz system test and principle verification sub-platform (4), and a very large-scale array signal real-time acquisition and processing sub-platform (5), wherein:
the terahertz integrated collaborative design and simulation sub-platform (1) is configured to obtain an optimal performance index parameter of a terahertz array chip of the terahertz focal plane imaging system, an optimal performance index parameter of a terahertz lens and an optimal performance index parameter of a terahertz integrated front end by performing design and optimization based on a system architecture of the terahertz focal plane array imaging system, obtain a physical parameter index of the terahertz array chip, a physical index parameter of the terahertz lens and a physical parameter index of the terahertz integrated front end respectively based on the optimal performance index parameter of the terahertz array chip, the optimal performance index parameter of the terahertz lens and the optimal performance index parameter of the terahertz integrated front end, obtain simulation output data based on the physical parameter index of the terahertz array chip, the physical parameter index of the terahertz lens, the physical parameter index of the terahertz integrated front end, an application environment parameter, and a feature parameter of a target, and transmit the simulation output data to the very large-scale array signal acquisition and processing sub-platform (5), wherein the very large-scale array signal acquisition and processing sub-platform (5) outputs a result and a simulation image of a scene and the target;
the terahertz chip test and modeling sub-platform (2) is configured to obtain a direct current parameter of the terahertz array chip and a vector network parameter of the terahertz array chip, obtain a model and a feature parameter of the terahertz array chip based on the direct current parameter of the terahertz array chip and the vector network parameter of the terahertz array chip, transmit the model of the terahertz array chip to the terahertz integrated collaborative design and simulation sub-platform (1) for optimizing a geometric structure parameter and a material parameter of the terahertz array chip, and transmit the feature parameter of terahertz array chip to the terahertz system test and principle verification sub-platform (5) as evaluation reference data for blind pixel detection; and
the integrated research and development platform for a terahertz focal plane imaging system is **characterized in that**:
the terahertz beam test and characterization sub-platform (3) is configured to output a terahertz excitation signal and a terahertz wave radiating freely in space, perform polarization transformation and beam separation on the terahertz wave, and irradiate the terahertz wave after polarization transformation and beam separation on the terahertz lens to be tested or a terahertz antenna to be tested; obtain a vector network parameter of the terahertz antenna to be tested based on the outputted terahertz signal and a signal from the terahertz antenna to be tested or a vector network parameter of the terahertz lens to be tested based on an outputted terahertz signal and a signal from the terahertz lens to be tested; obtain an antenna test parameter of the terahertz antenna to be tested based on the vector network parameter of the terahertz antenna to be tested, and obtain a lens test parameter of the terahertz lens to be tested based on the vector network parameter of the terahertz lens to be tested; input the antenna test parameter and the lens test parameter to the terahertz integrated collaborative simulation and design sub-platform (1) as reference data for designing, optimizing, and iterating the terahertz lens and the terahertz integrated front end; and input the antenna test parameter to the terahertz system test and principle verification sub-platform (4) as analysis reference data for blind pixel detection;
the terahertz system test and principle verification sub-platform (4) is configured to generate a terahertz modulation signal and process the terahertz modulation signal to obtain a free-space terahertz modulation wave, irradiate the free-space terahertz modulation wave on the terahertz integrated front end to be tested, and obtain an amplitude and a phase of a multi-channel intermediate frequency signal from the terahertz integrated front end to be tested, obtain a blind pixel and non-uniformity distribution of the integrated front end based on the amplitude and the phase of the multi-channel intermediate frequency signal, the feature parameter of the terahertz array chip obtained by the terahertz chip test and modeling sub-platform (2) and the antenna test parameter obtained by the terahertz beam test and characterization sub-platform (3), and transmit the amplitude and the phase of the multi-channel intermediate frequency signal to the very large-scale array signal real-time acquisition and processing sub-platform (5); and
the very large-scale array signal real-time acquisition and processing sub-platform (5) is configured to convert the amplitude and the phase of the multi-channel intermediate frequency signal to a digital signal, perform image preprocessing and image processing on the digital signal to obtain the image of the target and the identification result, and transmit the image of the target and the identification result to the terahertz system test and principle verification sub-platform (4) for display.

2. The integrated research and development platform for a terahertz focal plane imaging system according to claim 1, wherein the terahertz integrated collaborative design and simulation sub-platform (1) comprises a terahertz system behavior-level simulation and analysis module (11), a terahertz chip-level simulation and analysis module (12), a terahertz component-level simulation and analysis module (13), and a terahertz system-level simulation and analysis module (14), wherein
the terahertz system behavior-level simulation and analysis module (11) is configured to obtain the optimal performance index parameter of the terahertz array chip, the optimal performance index parameter of the terahertz lens and the optimal performance index parameter of the terahertz integrated front end by performing design and optimization based on the application environment parameter, the feature parameter of the target, and the system architecture of the terahertz focal plane array imaging system, and transmit the optimal performance index parameter of the terahertz array chip, the optimal performance index parameter of the terahertz lens and the optimal performance index parameter of the terahertz integrated front end to the terahertz chip-level simulation and analysis module (12) and the terahertz component-level simulation and analysis module (13);
the terahertz chip-level simulation and analysis module (12) is configured to obtain the geometric structure parameter and the material parameter of the terahertz array chip based on the optimal performance index parameter of the terahertz array chip, obtain the physical parameter index of the terahertz array chip based on the geometric structure parameter and the material parameter of the terahertz array chip, and obtain simulation output data of the terahertz array chip based on the physical parameter index of the terahertz array chip;
the terahertz component-level simulation and analysis module (13) is configured to obtain a geometric structure parameter and a material parameter of the terahertz lens based on the optimal performance index parameter of the terahertz lens, obtain the physical parameter index of the terahertz lens based on the geometric structure parameter and the material parameter of the terahertz lens, and obtain simulation output data of the terahertz lens based on the physical parameter index of the terahertz lens; and
the terahertz system-level simulation and analysis module (14) is configured to obtain a geometric structure parameter and a material parameter of the terahertz integrated front end based on the optimal performance index parameter of the terahertz integrated front end, obtain the physical parameter index of the terahertz integrated front end based on the geometric structure parameter and the material parameter of the terahertz integrated front end, and obtain simulation output data of the terahertz integrated front end based on the physical parameter index of the terahertz integrated front end.

3. The integrated research and development platform for a terahertz focal plane imaging system according to claim 1, wherein the terahertz chip test and modeling sub-platform (2) comprises a wafer-level precision positioning and environment control module (21), a terahertz chip direct current parameter and characterization module (22), a terahertz chip vector network parameter test and characterization module (23), and a terahertz chip feature comprehensive characterization and modeling module (24), and wherein
the wafer-level precision positioning and environment control module (21) is configured to fix the terahertz array chip;
the terahertz chip direct current parameter and characterization module (22) is configured to obtain the direct current parameter of the terahertz array chip and transmit the direct current parameter to the terahertz chip feature comprehensive characterization and modeling module (24);
the terahertz chip vector network parameter test and characterization module (23) is configured to obtain the vector network parameter of the terahertz array chip and transmit the vector network parameter to the terahertz chip feature comprehensive characterization and modeling module (24);
the terahertz chip feature comprehensive characterization and modeling module (24) is configured to obtain the model and the feature parameter of the terahertz array chip based on the direct current parameter of the terahertz array chip and the vector network parameter of the terahertz array chip, transmit the model of the terahertz array chip to the terahertz integrated collaborative design and simulation sub-platform (1) for optimizing the geometric structure parameter and the material parameter of the terahertz array chip, and transmit the feature parameter of the terahertz array chip to the terahertz system test and principle verification sub-platform (5) as the evaluation reference data for blind pixel detection.

4. The integrated research and development platform for a terahertz focal plane imaging system according to claim 1, wherein the terahertz beam test and characterization sub-platform (3) comprises a high-precision displacement and rotation module (31), a terahertz horn antenna module (32), a terahertz quasi-optical beam transformation module (33), a terahertz vector network parameter test and characterization module (34), a terahertz antenna feature characterization module (35), and a terahertz quasi-optical lens feature characterization module (36), and wherein
the high-precision displacement and rotation module (31) is configured to fix the terahertz lens to be tested or the terahertz antenna to be tested, and control a displacement and a rotation angle of the terahertz lens to be tested or a displacement and a rotation angle of the terahertz antenna to be tested;
the terahertz vector network parameter test and characterization module (34) is configured to output the terahertz excitation signal via a port, and the terahertz horn antenna module (32) is configured to emit the terahertz wave radiating freely in space;
the terahertz quasi-optical beam conversion module (33) is configured to receive the terahertz wave, perform polarization transformation and beam separation on the terahertz wave, and irradiate the terahertz wave after polarization transformation and beam separation on the terahertz lens to be tested or the terahertz antenna to be tested;
the terahertz vector network parameter test and characterization module (34) is configured to receive a terahertz response signal via another port from the terahertz lens to be tested or the terahertz antenna to be tested;
the terahertz vector network parameter test and characterization module (34) is configured to obtain the vector network parameter of the terahertz antenna to be tested based on the terahertz signal outputted via the port and the signal received from the terahertz antenna to be tested via the another port, or obtain the vector network parameter of the terahertz lens to be tested based on the terahertz signal outputted via the port and the signal received from the terahertz lens to be tested via the another port;
the terahertz antenna feature characterization module (35) is configured to obtain the antenna test parameter of the terahertz antenna to be tested based on the vector network parameter of the terahertz antenna to be tested, and transmit the antenna test parameter to the terahertz integrated collaborative simulation and design sub-platform (1) and the terahertz system test and principle verification sub-platform (4); and
the terahertz quasi-optical lens feature characterization module (36) is configured to obtain the lens test parameter of the terahertz lens to be tested based on the vector network parameter of the terahertz lens to be tested, and transmit the lens test parameter of the terahertz lens to be tested to the terahertz integrated collaborative simulation and design sub-platform (1).

5. The integrated research and development platform for a terahertz focal plane imaging system according to claim 1, wherein the terahertz system test and principle verification sub-platform (4) comprises a terahertz modulation signal generation module (41), a terahertz horn antenna module (42), a channel output signal test module (43), a blind pixel and non-uniformity detection and analysis module (44), and a display module (45), and wherein
the terahertz modulation signal generation module (41) is configured to generate a terahertz modulation signal;
the terahertz horn antenna module (42) is configured to convert the terahertz modulation signal to a free-space terahertz modulation wave and irradiate the free-space terahertz modulation wave on the terahertz integrated front end to be tested, wherein the terahertz integrated front end to be tested outputs the multi-channel intermediate frequency signal and transmits the multi-channel intermediate frequency signal to the channel output signal test module (43);
the channel output signal test module (43) is configured to obtain the amplitude and the phase of the multi-channel intermediate frequency signal, and transmit the amplitude and the phase to the blind pixel and non-uniformity detection and analysis module (44) and the very large-scale array signal real-time acquisition and processing sub-platform (5);
the blind pixel and non-uniformity detection and analysis module (44) is configured to obtain the blind pixel and the non-uniformity distribution of the terahertz integrated front end based on the amplitude and the phase of the multi-channel intermediate frequency signal, the feature parameter of the terahertz array chip obtained by the terahertz chip test and modeling sub-platform (2) and the antenna test parameter obtained by the terahertz beam test and characterization sub-platform (3); and
the display module (45) is configured to display the amplitude and the phase of the multi-channel intermediate frequency signal in an image mode.

6. The integrated research and development platform for a terahertz focal plane imaging system according to claim 1, wherein the very large-scale array signal real-time acquisition and processing sub-platform (5) comprises an array signal acquisition module (51), an array signal preprocessing module (52), and an image processing module (53), and wherein
the array signal acquisition module (51) is configured to convert the amplitude and the phase of the multi-channel intermediate frequency signal from the terahertz system test and principle verification sub-platform (4) to a digital signal, and transmit the digital signal to the array signal preprocessing module (52);
the array signal preprocessing module (52) is configured to perform image preprocessing on the digital signal to obtain a preprocessed image, and transmit the preprocessed image to the image processing module (53); and
the image processing module (53) is configured to perform image processing on the preprocessed image to obtain the image of the target and the identification result, and transmit the image of the target and the identification result to the terahertz system test and principle verification sub-platform (4) for display.

7. The integrated research and development platform for a terahertz focal plane imaging system according to claim 2, wherein the terahertz system behavior-level simulation and analysis module comprises a scene definition unit (111), a target definition unit (112), a scene and target behavior model base (113), a system function definition unit (114), a system component behavior model base (115), and a system behavior-level design and optimization unit (116), wherein
the scene definition unit (111) is configured to obtain the application environment parameter and transmit the application environment parameter to the scene and target behavior model base (113);
the target definition unit (112) is configured to obtain the feature parameter of the target and transmit the feature parameter of the target to the scene and target behavior model base (113);
the scene and target behavior model base (113) is configured to obtain a behavior-level simulation target feature parameter and a behavior-level simulation application environment parameter based on the application environment parameter and the feature parameter of the target;
the system function definition unit (114) is configured to obtain the terahertz system architecture based on an inputted system operation mode, and transmit the terahertz system architecture to the system component behavior model base (115);
the system component behavior model base (115) is configured to obtain models of the terahertz array chip, the terahertz lens and the terahertz integrated front end based on the terahertz system architecture, and transmit the models of the terahertz array chip, the terahertz lens and the terahertz integrated front end to the system behavior-level design and optimization unit (116); and
the system behavior-level design and optimization unit (116) is configured to perform simulation and optimization on the models of the terahertz array chip, the terahertz lens and the terahertz integrated front end to obtain the optimal performance index parameter of the terahertz array chip, the optimal performance index parameter of the terahertz lens and the optimal performance index parameter of the terahertz integrated front end.

8. The integrated research and development platform for a terahertz focal plane imaging system according to claim 2, wherein the terahertz chip-level simulation and analysis module (12) comprises a chip-level collaborative design and optimization unit (121), a nonlinear device design and optimization unit (122), and a non-electrically large linear device design and optimization unit (123), wherein
the chip-level collaborative design and optimization unit (121) is configured to receive the optimal performance index parameter of the terahertz array chip, transmit the optimal performance index parameter of the terahertz array chip to the nonlinear device design and optimization unit (122), and model the terahertz array chip to obtain a nonlinear device physical model and a non-electrically large linear device physical model;
the nonlinear device design and optimization unit (122) is configured to obtain a nonlinear device geometric structure parameter and a nonlinear device material parameter based on the optimal performance index parameter of the terahertz array chip and the nonlinear device physical model, and feed the nonlinear device geometric structure parameter and the nonlinear device material parameter back to the chip-level collaborative design and optimization unit (121);
the non-electrically large linear device design and optimization unit (123) is configured to obtain a non-electrically large linear device geometric structure parameter and a non-electrically large linear device material parameter based on the non-electrically large linear device physical model, and feed the non-electrically large linear device geometric structure parameter and the non-electrically large linear device material parameter back to the chip-level collaborative design and optimization unit (121); and
the chip-level collaborative design and optimization unit (121) is configured to obtain an optimized physical model of the terahertz array chip based on the nonlinear device geometric structure parameter, the nonlinear device material parameter, the non-electrically large linear device geometric structure parameter and the non-electrically large linear device material parameter, and transmit the optimized physical model of the terahertz array chip to the terahertz system-level simulation and analysis module (14).

9. The integrated research and development platform for a terahertz focal plane imaging system according to claim 2, wherein the terahertz component-level simulation and analysis module (13) comprises a component-level collaborative design and simulation unit (131), an electrically large linear component design and optimization unit (132), and an interconnection structure simulation unit (133), wherein
the component-level collaborative design and simulation unit (131) is configured to receive the optimal performance index parameter of the terahertz lens and the optimal performance index parameter of the integrated front-end, transmit a physical model of the terahertz lens to the electrically large linear component design and optimization unit (132) and transmit a physical model of a interconnection structure of the terahertz integrated front end to the interconnection structure simulation unit (133);
the electrically large linear module design and optimization unit (132) is configured to obtain the geometric structure parameter and the material parameter of the terahertz lens based on the optimal performance index parameter of the terahertz lens and the physical model of the terahertz lens, and feed the geometric structure parameter and the material parameter of the terahertz lens back to the component-level collaborative design and simulation unit (131);
the interconnection structure simulation unit (133) is configured to obtain a geometric structure parameter and a material parameter of the interconnection structure based on the optimal performance index parameter of the terahertz integrated front end and the physical model of the interconnection structure of the terahertz integrated front end, and feed the geometric structure parameter and the material parameter of the interconnection structure back to the component-level collaborative design and simulation unit (131); and
the component-level collaborative design and simulation unit (131) is configured to obtain an optimized physical model of the terahertz lens based on the geometric structure parameter and the material parameter of the terahertz lens, obtain an optimized physical model of the interconnection structure based on the geometric structure parameter and the material parameter of the interconnection structure, and transmit the optimized physical model of the terahertz lens and the optimized physical model of the interconnection structure to the terahertz system-level simulation and analysis module (14).

10. The integrated research and development platform for a terahertz focal plane imaging system according to claim 2, wherein the terahertz system-level simulation and analysis module (14) comprises a target full-wave simulation unit (141), a system collaborative simulation unit (142), a system simulation structure storage unit (143) and a system performance evaluation unit (144), wherein
the target full-wave simulation unit (141) is configured to obtain the feature parameter of the target based on a full-wave analysis method, and transmit the feature parameter of the target to the system collaborative simulation unit (142);
the system collaborative simulation unit (142) is configured to obtain a simulation output signal parameter of the physical model of the terahertz integrated front end based on the optimized physical model of the terahertz integrated front end and the feature parameter of the target, and transmit the simulation output signal parameter of the physical model of the terahertz integrated front end to the system simulation structure storage unit (143);
the system simulation structure storage unit (143) is configured to receive and store the simulation output signal parameter of the physical model of the terahertz integrated front end, and transmit the simulation output signal parameter of the physical model of the terahertz integrated front end to the very large-scale array signal real-time acquisition and processing sub-platform (5) to obtain the simulation image of the target; and
the system performance evaluation unit (144) is configured to obtain a system design performance evaluation table of the terahertz integrated front end based on the simulation image of the target.

11. The integrated research and development platform for a terahertz focal plane imaging system according to claim 3, wherein the wafer-level precision positioning and environment control module (21) comprises a photoelectric shielding and precision micro-environment control unit (211), a micro-vibration isolation unit (212), a ultra-fast high-low temperature precision environment control unit (213), a precision three-dimensional displacement platform automatic positioning unit (214), a high-resolution digital microscopic imaging unit (215), a low-temperature frost-free control unit (216), a three-dimensional dimension measurement evaluation and image processing unit (217), a micron-level three-dimensional displacement control unit (218), and a wafer-level precision multi-dimensional calibration unit (219), wherein
the photoelectric shielding and precision microenvironment control unit (211) is configured to provide an optical anechoic chamber environment and an electromagnetic anechoic chamber environment for the terahertz array chip;
the micro-vibration isolation unit (212) is configured to provide a stable vibration environment for the terahertz array chip;
the ultra-fast high-low temperature precision environment control unit (213) is configured to provide a stable ambient temperature for the terahertz array chip;
the low-temperature frost-free control unit (216) is configured to provide a low-temperature and frost-free dry environment for the terahertz array chip;
the precision three-dimensional displacement platform automatic positioning unit (214) is configured to control a displacement of the terahertz array chip;
the high-resolution digital microscopic imaging unit (215) is configured to perform microscopic imaging on the terahertz array chip and store an image of the terahertz array chip;
the three-dimensional dimension measurement evaluation and image processing unit (217) is configured to measure a structure on the terahertz array chip and output a feature dimension of the structure on the terahertz array chip;
the micron-level three-dimensional displacement control unit (218) is configured to control a micro-displacement of the terahertz array chip to control the terahertz array chip to be located in a field of view of the high-resolution digital microscopic imaging unit (215); and
the wafer-level precision multi-dimensional calibration unit (219) is configured to provide an on-chip precision calibration film for the terahertz array chip to perform on-chip test and calibration on the terahertz array chip.

12. The integrated research and development platform for a terahertz focal plane imaging system according to claim 3, wherein the terahertz chip direct current parameter test and characterization module (22) comprises a direct current parameter test and analysis unit (220), a direct current bias voltage excitation and response test unit (221), an alternating current voltage excitation and response test unit (222) and a pulse excitation and response test unit (223), wherein
the direct current bias voltage excitation and response test unit (221) is configured to obtain an I-V feature parameter of the terahertz array chip;
the alternating current voltage excitation and response test unit (222) is configured to obtain a C-V feature parameter of the terahertz array chip;
the pulse excitation and response test unit (223) is configured to obtain a pulse feature parameter of the terahertz array chip;
the direct current parameter test and analysis unit (220) is configured to obtain a direct current feature of the terahertz array chip based on the I-V feature parameter, the C-V feature parameter and the pulse feature parameter.

13. The integrated research and development platform for a terahertz focal plane imaging system according to claim 3, wherein the terahertz chip vector network parameter test and characterization module (23) comprises a vector network parameter test and analysis unit (230), a terahertz frequency expansion module-band N (231N), a contact terahertz signal feed unit (232NA), a non-contact terahertz signal feed unit (232NB), and a contact terahertz signal feed unit (232NA), wherein
the vector network parameter test and analysis unit (230) is configured to provide a microwave-band excitation signal;
the terahertz frequency expansion module-band N (231N) is configured to perform up-conversion on the microwave-band excitation signal and output the terahertz excitation signal;
the terahertz excitation signal is fed to an input port of the terahertz array chip through the contact terahertz signal feed unit (232NA) or the non-contact terahertz signal feed unit (232NB);
a terahertz signal is outputted by the terahertz array chip via an output port of the terahertz array chip, and is inputted to the terahertz frequency expansion module-band N (231N) through the contact terahertz signal feed unit (232NA) or the non-contact terahertz signal feed unit (232NB);
the terahertz frequency expansion module-band N (231N) is configured to perform down-conversion on the outputted terahertz signal to obtain a microwave response signal, wherein the microwave response signal is inputted to the vector network parameter test and analysis unit (230); and
the vector network parameter test and analysis unit (230) is configured to obtain the vector network parameter of the terahertz array chip based on the microwave-band excitation signal and the microwave response signal.

14. The integrated research and development platform for a terahertz focal plane imaging system according to claim 3, wherein the terahertz chip feature comprehensive characterization and modeling module (24) comprises a chip feature synthesis unit (241), a pixel consistency analysis unit (242), and a device modeling and parameter extraction unit (243), wherein
the chip feature synthesis unit (241) is configured to receive the direct current parameter of the terahertz array chip and the vector network parameter of the terahertz array chip and obtain the feature parameter of the terahertz array chip based on the direct current parameter of the terahertz array chip and the vector network parameter of the terahertz array chip;
the pixel consistency analysis unit (242) is configured to obtain consistency of the feature parameter of the terahertz array chip based on the feature parameter of the terahertz array chip; and
the device modeling and parameter extraction unit (243) is configured to establish the equivalent network model of the terahertz array chip based on consistency analysis data of the feature parameter, extract a parameter of the model, and output the model and the feature parameter of the terahertz array chip.

15. The integrated research and development platform for a terahertz focal plane imaging system according to claim 4, wherein the high-precision displacement and rotation module (31) comprises a seamless reconfigurable quasi-optical platform (310), a programmable control unit (311), a high-precision three-dimensional displacement unit (312), and a micro-radian rotation unit (313), wherein
the seamless reconfigurable quasi-optical platform (310) is configured to fix the terahertz lens to be tested or the terahertz antenna to be tested;
the programmable control unit (311) is configured to output a displacement command and a rotation command;
the high-precision three-dimensional displacement unit (312) is configured to control the displacement of the terahertz lens to be tested or the displacement of the terahertz antenna to be tested in response to the displacement rotation, and
the micro-radian rotation unit (313) is configured to control rotation of the terahertz lens to be tested or rotation of the terahertz antenna to be tested in response to the rotation command.

## Patentansprüche

1. Integrierte Forschungs- und Entwicklungsplattform für ein Terahertz-Fokalebenen-Bildgebungssystem, umfassend eine integrierte Terahertz-Subplattform für kollaborative Konstruktion und Simulation (1), eine Terahertz-Chip-Test- und -Modellierungs-Subplattform (2), eine Terahertz-Strahlprüf- und -Charakterisierungs-Subplattform (3), eine Terahertz-Systemprüf- und -Prinzipverifizierung-Subplattform (4) und eine sehr großskalige Arraysignal-Echtzeiterfassungs- und -verarbeitungs-Subplattform (5) umfasst, wobei:
die integrierte Terahertz-Subplattform für kollaborative Konstruktion und Simulation (1) konfiguriert ist, um einen optimalen Leistungsindexparameter eines Terahertz-Array-Chips des Terahertz-Fokalebenen-Bildgebungssystems, einen optimalen Leistungsindexparameter einer Terahertz-Linse und einen optimalen Leistungsindexparameter eines integrierten Terahertz-Frontends zu erlangen, indem eine Konstruktion und eine Optimierung basierend auf einer Systemarchitektur des Terahertz-Fokalebenen-Array-Bildgebungssystems durchgeführt werden, einen physikalischen Parameterindex des Terahertz-Array-Chips, einen physikalischen Parameterindex der Terahertz-Linse und einen physikalischen Parameterindex des integrierten Terahertz-Frontends jeweils basierend auf dem optimalen Leistungsindexparameter des Terahertz-Array-Chips, des optimalen Leistungsindexparameters der Terahertz-Linse und des optimalen Leistungsindexparameters des integrierten Terahertz-Frontends zu erlangen, Simulationsausgangsdaten basierend auf dem physikalischen Parameterindex des Terahertz-Array-Chips, dem physikalischen Parameterindex der Terahertz-Linse, dem physikalischen Parameterindex des integrierten Terahertz-Frontends, einem Anwendungsumgebungsparameter und einem Merkmalsparameter eines Ziels zu erlangen, und die Simulationsausgangsdaten an die sehr großskalige Arraysignal-Echtzeiterfassungs- und - verarbeitungs-Subplattform (5) zu übertragen, wobei die sehr großskalige Arraysignal-Echtzeiterfassungs- und -verarbeitungs-Subplattform (5) ein Resultat und ein Simulationsbild einer Szene und des Ziels ausgibt;
wobei die Terahertz-Chip-Test- und -Modellierungs-Subplattform (2) konfiguriert ist, um einen Gleichstromparameter des Terahertz-Array-Chips und einen Vektornetzparameter des Terahertz-Array-Chips zu erlangen, ein Modell und einen Merkmalsparameter des Terahertz-Array-Chips basierend auf dem Gleichstromparameter des Terahertz-Array-Chips und dem Vektornetzparameter des Terahertz-Array-Chips zu erlangen, das Modell des Terahertz-Array-Chips an die integrierte Terahertz-Subplattform für kollaborative Konstruktion und Simulation (1) zum Optimieren eines geometrischen Strukturparameters und eines Materialparameters des Terahertz-Array-Chips zu übertragen, und den Merkmalsparameter des Terahertz-Array-Chips an die Terahertz-Systemprüf- und -Prinzipverifizierung-Subplattform (5) als Bewertungsreferenzdaten zur Blindpixelerkennung zu übertragen; und
wobei die integrierte Forschungs- und Entwicklungsplattform für ein Terahertz-Fokalebenen-Bildgebungssystem **dadurch gekennzeichnet ist, dass**:
die Terahertz-Strahlprüf- und -Charakterisierungs-Subplattform (3) konfiguriert ist, um ein Terahertz-Erregungssignal und eine frei im Raum strahlende Terahertz-Welle auszugeben, eine Polarisationstransformation und Strahlteilung der Terahertz-Welle durchzuführen und die Terahertz-Welle nach Polarisationstransformation und Strahlteilung auf die zu prüfende Terahertz-Linse oder eine zu prüfende Terahertz-Antenne abzustrahlen; einen Vektornetzparameter der zu prüfenden Terahertz-Antenne basierend auf dem ausgegebenen Terahertz-Signal und einem Signal von der zu prüfenden Terahertz-Antenne oder einen Vektornetzparameter der zu prüfenden Terahertz-Linse basierend auf einem ausgegebenen Terahertz-Signal und einem Signal von der zu prüfenden Terahertz-Linse zu erlangen; einen Antennenprüfparameter der zu prüfenden Terahertz-Antenne basierend auf dem Vektornetzparameter der zu prüfenden Terahertz-Antenne zu erlangen, und einen Linsenprüfparameter der zu prüfenden Terahertz-Linse basierend auf dem Vektornetzparameter der zu prüfenden Terahertz-Linse zu erlangen; den Antennenprüfparameter und den Linsenprüfparameter in die integrierte Terahertz-Subplattform für kollaborative Konstruktion und Simulation (1) als Referenzdaten zum Konstruieren, Optimieren und Iterieren der Terahertz-Linse und des integrierten Terahertz-Frontends einzugeben; und den Antennenprüfparameter in die Terahertz-Systemprüf- und -Prinzipverifizierung-Subplattform (4) als Analysereferenzdaten zur Blindpixelerkennung einzugeben;
wobei die Terahertz-Systemprüf- und -Prinzipverifizierung-Subplattform (4) konfiguriert ist, um ein Terahertz-Modulationssignal zu erzeugen und das Terahertz-Modulationssignal zu verarbeiten, um eine Freiraum-Terahertz-Modulationswelle zu erlangen, die Freiraum-Terahertz-Modulationswelle auf das zu prüfende integrierte Terahertz-Frontend abzustrahlen, und eine Amplitude und eine Phase eines Mehrkanal-Zwischenfrequenzsignals aus dem zu prüfenden integrierten Terahertz-Frontend zu erlangen, eine Blindpixel- und Ungleichmäßigkeitsverteilung des integrierten Frontends basierend auf der Amplitude und der Phase des Mehrkanal-Zwischenfrequenzsignals, dem Merkmalsparameter des Terahertz-Array-Chips, der durch die Terahertz-Chip-Test- und -Modellierungs-Subplattform (2) erlangt wird, und dem Antennenprüfparameter, der durch die Terahertz-Strahlprüf- und -Charakterisierungs-Subplattform (3) erlangt wird, zu erlangen, und die Amplitude und die Phase des Mehrkanal-Zwischenfrequenzsignals an die sehr großskalige Arraysignal-Echtzeiterfassungs- und - verarbeitungs-Subplattform (5) zu übertragen; und
wobei die sehr großskalige Arraysignal-Echtzeiterfassungs- und -verarbeitungs-Subplattform (5) konfiguriert ist, um die Amplitude und die Phase des Mehrkanal-Zwischenfrequenzsignals in ein digitales Signal umzuwandeln, Bildvorverarbeitung und einer Bildverarbeitung des digitalen Signals auszuführen, um das Bild des Ziels und das Identifizierungsresultat zu erlangen, und das Bild des Ziels und das Identifizierungsresultat an die Terahertz-Systemprüf- und -Prinzipverifizierung-Subplattform (4) zur Anzeige zu übertragen.

2. Integrierte Forschungs- und Entwicklungsplattform für ein Terahertz-Fokalebenen-Bildgebungssystem nach Anspruch 1, wobei die integrierte Terahertz-Subplattform für kollaborative Konstruktion und Simulation (1) Folgendes umfasst ein Terahertz-System-Verhaltensebene-Simulations- und Analysemodul (11), ein Terahertz-Chipebene-Simulations- und Analysemodul (12), ein Terahertz-Komponentenebene-Simulations- und Analysemodul (13), und ein Terahertz-Systemebene-Simulations- und Analysemodul (14), wobei
das Terahertz-System-Verhaltensebene-Simulations- und Analysemodul (11) konfiguriert ist, um den optimalen Leistungsindexparameter des Terahertz-Array-Chips, den optimalen Leistungsindexparameter der Terahertz-Linse und den optimalen Leistungsindexparameter des integrierten Terahertz-Frontends zu erlangen, indem Konstruktion und Optimierung basierend auf dem Anwendungsumgebungsparameter, dem Merkmalsparameter des Ziels und der Systemarchitektur des Terahertz-Fokalebenen-Array-Bildgebungssystems durchgeführt werden, und den optimalen Leistungsindexparameter des Terahertz-Array-Chips, den optimalen Leistungsindexparameter der Terahertz-Linse und den optimalen Leistungsindexparameter des integrierten Terahertz-Frontends an das Terahertz-Chipebene-Simulations- und Analysemodul (12) und das Terahertz-Komponentenebene-Simulations- und Analysemodul (13) zu übertragen;
das Terahertz-Chipebene-Simulations- und Analysemodul (12) konfiguriert ist, um den geometrischen Strukturparameter und den Materialparameter des Terahertz-Array-Chips basierend auf dem optimalen Leistungsindexparameter des Terahertz-Array-Chips zu erlangen, den physikalischen Parameterindex des Terahertz-Array-Chips basierend auf dem geometrischen Strukturparameter und des Materialparameters des Terahertz-Array-Chips zu erlangen, und Simulationsausgangsdaten des Terahertz-Array-Chips basierend auf dem physikalischen Parameterindex des Terahertz-Array-Chips zu erlangen;
wobei das Terahertz-Komponentenebene-Simulations- und Analysemodul (13) konfiguriert ist, um einen geometrischen Strukturparameter und einen Materialparameter der Terahertz-Linse basierend auf dem optimalen Leistungsindexparameter der Terahertz-Linse zu erlangen, den physikalischen Parameterindex der Terahertz-Linse basierend auf dem geometrischen Strukturparameter und de Materialparameter der Terahertz-Linse zu erlangen, und Simulationsausgangsdaten der Terahertz-Linse basierend auf dem physikalischen Parameterindex der Terahertz-Linse zu erlangen; und
das Terahertz-Systemebene-Simulations- und Analysemodul (14) konfiguriert ist, um einen geometrischen Strukturparameter und einen Materialparameter des integrierten Terahertz-Frontends basierend auf dem optimalen Leistungsindexparameter des integrierten Terahertz-Frontends zu erlangen, den physikalischen Parameterindex des integrierten Terahertz-Frontends basierend auf dem geometrischen Strukturparameter und dem Materialparameter des integrierten Terahertz-Frontends zu erlangen, und Simulationsausgangsdaten des integrierten Terahertz-Frontends basierend auf dem physikalischen Parameterindex des integrierten Terahertz-Frontends zu erlangen.

3. Integrierte Forschungs- und Entwicklungsplattform für ein Terahertz-Fokalebenen-Bildgebungssystem nach Anspruch 1, wobei die Terahertz-Chip-Test- und Modellierungs-Subplattform (2) Folgendes umfasst ein Waferebenen-Präzisionspositionierungs- und Umgebungskontrollmodul (21), ein Terahertz-Chip-Gleichstromparameter- und Charakterisierungsmodul (22), ein Terahertz-Chip-Vektornetzwerkparameter-Test- und Charakterisierungsmodul (23), und ein umfassendes Terahertz-Chipmerkmal-Charakterisierungs- und Modellierungsmodul (24), und wobei
das Waferebenen-Präzisionspositionierungs- und Umgebungskontrollmodul (21) konfiguriert ist, um den Terahertz-Array-Chip zu fixieren;
das Terahertz-Chip-Gleichstromparameter- und Charakterisierungsmodul (22) konfiguriert ist, um den Gleichstromparameter des Terahertz-Array-Chips zu erlangen und den Gleichstromparameter an das umfassendes Terahertz-Chipmerkmal-Charakterisierungs- und Modellierungsmodul (24) zu übertragen;
das Terahertz-Chip-Vektornetzwerkparameter-Test- und Charakterisierungsmodul (23) konfiguriert ist, um den Vektornetzparameter des Terahertz-Array-Chips zu erlangen und den Vektornetzparameter an das umfassende Terahertz-Chipmerkmal-Charakterisierungs- und Modellierungsmodul (24) zu übertragen;
das umfassende Terahertz-Chipmerkmal-Charakterisierungs- und Modellierungsmodul (24) konfiguriert ist, um das Modell und den Merkmalsparameter des Terahertz-Array-Chips basierend auf dem Gleichstromparameter des Terahertz-Array-Chips und dem Vektornetzparameter des Terahertz-Array-Chips zu erlangen, das Modell des Terahertz-Array-Chips an die integrierte Terahertz-Subplattform für kollaborative Konstruktion und Simulation (1) zu übertragen, um den geometrischen Strukturparameter und den Materialparameter des Terahertz-Array-Chips zu optimieren, und die Merkmalsparameter des Terahertz-Array-Chips an die Terahertz-Systemprüf- und -Prinzipverifizierung-Subplattform (5) als Bewertungsreferenzdaten zur Blindpixelerkennung zu übertragen.

4. Integrierte Forschungs- und Entwicklungsplattform für ein Terahertz-Fokalebenen-Bildgebungssystem nach Anspruch 1, wobei die Terahertz-Strahlprüf- und -Charakterisierungs-Subplattform (3) Folgendes umfasst ein hochpräzises Verlagerungs- und Drehmodul (31), ein Terahertz-Hornantennenmodul (32), ein quasioptisches Terahertz-Strahltransformationsmodul (33), ein Terahertz-Vektornetzparameter-Prüf- und Charakterisierungsmodul (34), ein Terahertz-Antennenmerkmal-Charakterisierungsmodul (35), und ein quasioptisches Terahertz-Linsenmerkmal-Charakterisierungsmodul (36), und wobei
das hochpräzise Verlagerungs- und Drehmodul (31) konfiguriert ist, um die zu prüfende Terahertz-Linse oder die zu prüfende Terahertz-Antenne zu fixieren, und eine Verlagerung und einen Drehwinkel der zu prüfenden Terahertz-Linse oder eine Verlagerung und einen Drehwinkel der zu prüfenden Terahertz-Antenne zu steuern;
das Terahertz-Vektornetzparameter-Prüf- und Charakterisierungsmodul (34) konfiguriert ist, um das Terahertz-Erregungssignal über einen Anschluss auszugeben, und das Terahertz-Hornantennenmodul (32) konfiguriert ist, um die Terahertz-Welle frei im Raum zu emittieren;
das quasioptische Terahertz-Strahlumwandlungsmodul (33) konfiguriert ist, um die Terahertz-Welle zu empfangen, eine Polarisationstransformation und Strahlteilung an der Terahertz-Welle durchzuführen und die Terahertz-Welle nach Polarisationstransformation und Strahlteilung auf die zu prüfende Terahertz-Linse oder die zu prüfende Terahertz-Antenne abzustrahlen;
das Terahertz-Vektornetzparameter-Prüf- und Charakterisierungsmodul (34) konfiguriert ist, um über einen anderen Anschluss ein Terahertz-Antwortsignal von der zu prüfenden Terahertz-Linse oder der zu prüfenden Terahertz-Antenne zu empfangen;
das Terahertz-Vektornetzparameter-Prüf- und Charakterisierungsmodul (34) konfiguriert ist, um den Vektornetzparameter der zu prüfenden Terahertz-Antenne basierend auf dem über den Anschluss ausgegebenen Terahertz-Signal und dem von der zu prüfenden Terahertz-Antenne über den anderen Anschluss empfangenen Signal zu erlangen, oder den Vektornetzparameter der zu prüfenden Terahertz-Linse basierend auf dem über den Anschluss ausgegebenen Terahertz-Signal und dem von der zu prüfenden Terahertz-Linse über den anderen Anschluss empfangenen Signal zu erlangen;
das Terahertz-Antennenmerkmal-Charakterisierungsmodul (35) konfiguriert ist, um den Antennenprüfparameter der zu prüfenden Terahertz-Antenne basierend auf dem Vektornetzparameter der zu prüfenden Terahertz-Antenne zu erlangen, und den Antennenprüfparameter an die integrierte Terahertz-Subplattform für kollaborative Konstruktion und Simulation (1) und die Terahertz-Systemprüf- und -Prinzipverifizierung-Subplattform (4) zu übertragen; und
das quasioptische Terahertz-Linsenmerkmal-Charakterisierungsmodul (36) konfiguriert ist, um den Linsenprüfparameter der zu prüfenden Terahertz-Linse basierend auf dem Vektornetzparameter der zu prüfenden Terahertz-Linse zu erlangen, und den Linsenprüfparameter der zu prüfenden Terahertz-Linse an die integrierte Terahertz-Subplattform für kollaborative Konstruktion und Simulation (1) zu übertragen.

5. Integrierte Forschungs- und Entwicklungsplattform für ein Terahertz-Fokalebenen-Bildgebungssystem nach Anspruch 1, wobei die Terahertz-Systemprüf- und - Prinzipverifizierung-Subplattform (4) Folgendes umfasst ein Terahertz-Modulationssignal-Erzeugungsmodul (41), ein Terahertz-Hornantennenmodul (42), ein Kanalausgangssignal-Prüfmodul (43), ein Blindpixel- und Ungleichmäßigkeit-Erkennungs- und Analysemodul (44), und ein Anzeigemodul (45), und wobei
das Terahertz-Modulationssignal-Erzeugungsmodul (41) konfiguriert ist, um ein Terahertz-Modulationssignal zu erzeugen;
das Terahertz-Hornantennenmodul (42) konfiguriert ist, um das Terahertz-Modulationssignal in eine Freiraum-Terahertz-Modulationswelle umzuwandeln, und die Freiraum-Terahertz-Modulationswelle auf das zu prüfende integrierte Terahertz-Frontend abzustrahlen, wobei das zu prüfende integrierte Terahertz-Frontend das Mehrkanal-Zwischenfrequenzsignal ausgibt und das Mehrkanal-Zwischenfrequenzsignal an das Kanalausgangssignal-Prüfmodul (43) überträgt;
das Kanalausgangssignal-Prüfmodul (43) konfiguriert ist, um die Amplitude und die Phase des Mehrkanal-Zwischenfrequenzsignals zu erlangen und die Amplitude und die Phase an das Blindpixel- und Ungleichmäßigkeit-Erkennungs- und Analysemodul (44) und an die sehr großskalige Arraysignal-Echtzeiterfassungs- und -verarbeitungs-Subplattform (5) zu übertragen;
wobei das Blindpixel- und Ungleichmäßigkeit-Erkennungs- und Analysemodul (44) konfiguriert ist, um die Blindpixel- und Ungleichmäßigkeitsverteilung des integrierten Terahertz-Frontends basierend auf der Amplitude und der Phase des Mehrkanal-Zwischenfrequenzsignals, dem Merkmalsparameter des Terahertz-Array-Chips, der durch die Terahertz-Chip-Test- und -Modellierungs-Subplattform (2) erlangt wird, und dem Antennenprüfparameter, der durch die Terahertz-Strahlprüf- und -Charakterisierungs-Subplattform (3) erlangt wird, zu erlangen, und
das Anzeigemodul (45) konfiguriert ist, um die Amplitude und die Phase des Mehrkanal-Zwischenfrequenzsignals in einem Bildmodus anzuzeigen.

6. Integrierte Forschungs- und Entwicklungsplattform für ein Terahertz-Fokalebenen-Bildgebungssystem nach Anspruch 1, wobei die sehr großskalige Arraysignal-Echtzeiterfassungs- und -verarbeitungs-Subplattform (5) ein Arraysignal-Erfassungsmodul (51), ein Arraysignal-Vorverarbeitungsmodul (52) und ein Bildverarbeitungsmodul (53) umfasst, und wobei
das Arraysignal-Erfassungsmodul (51) konfiguriert ist, um die Amplitude und die Phase des Mehrkanal-Zwischenfrequenzsignals von der Terahertz-Systemprüf- und - Prinzipverifizierung-Subplattform (4) in ein digitales Signal umzuwandeln und das digitale Signal an das Arraysignal-Vorverarbeitungsmodul (52) zu übertragen;
das Arraysignal-Vorverarbeitungsmodul (52) konfiguriert ist, um eine Bildvorverarbeitung des digitalen Signals durchzuführen, um ein vorverarbeitetes Bild zu erlangen, und das vorverarbeitete Bild an das Bildverarbeitungsmodul (53) zu übertragen; und
das Bildverarbeitungsmodul (53) konfiguriert ist, um Bildverarbeitung des vorverarbeiteten Bilds durchzuführen, um das Bild des Ziels und das Identifizierungsresultat zu erlangen, und das Bild des Ziels und das Identifizierungsresultat an die Terahertz-Systemprüf- und - Prinzipverifizierung-Subplattform (4) zur Anzeige zu übertragen.

7. Integrierte Forschungs- und Entwicklungsplattform für ein Terahertz-Fokalebenen-Bildgebungssystem nach Anspruch 2, wobei das Terahertz-System-Verhaltensebene-Simulations- und Analysemodul eine Szenendefinitionseinheit (111), eine Zieldefinitionseinheit (112), eine Szenen- und Zielverhalten-Modellbasis (113), eine Systemfunktion-Definitionseinheit (114), eine Systemkomponentenverhalten-Modellbasis (115), und eine Systemverhaltensebene-Konstruktions- und Optimierungseinheit (116), wobei
die Szenendefinitionseinheit (111) konfiguriert ist, um den Anwendungsumgebungsparameter zu erlangen und den Anwendungsumgebungsparameter an die Szenen- und Zielverhalten-Modellbasis (113) zu übertragen;
die Zieldefinitionseinheit (112) konfiguriert ist, um den Merkmalsparameter des Ziels zu erlangen und den Merkmalsparameter des Ziels an die Szenen- und Zielverhalten-Modellbasis (113) zu übertragen;
die Szenen- und Zielverhalten-Modellbasis (113) konfiguriert ist, um einen Verhaltensebenensimulation-Zielmerkmalsparameter und einen Verhaltensebenensimulation-Anwendungsumgebungsparameter basierend auf dem Anwendungsumgebungsparameters und dem Merkmalsparameter des Ziels erlangen;
wobei die Systemfunktion-Definitionseinheit (114) konfiguriert ist, um die Terahertz-Systemarchitektur basierend auf einem eingegebenen Systembetriebsmodus zu erlangen, und die Terahertz-Systemarchitektur an die Systemkomponentenverhalten-Modellbasis (115) zu übertragen;
die Systemkomponentenverhalten-Modellbasis (115) konfiguriert ist, um Modelle des Terahertz-Array-Chips, der Terahertz-Linse und des integrierten Terahertz-Frontends basierend auf der Terahertz-Systemarchitektur zu erlangen und die Modelle des Terahertz-Array-Chips, der Terahertz-Linse und des integrierten Terahertz-Frontends an die Systemverhaltensebene-Konstruktions- und Optimierungseinheit (116) zu übertragen; und
die Systemverhaltensebene-Konstruktions- und Optimierungseinheit (116) konfiguriert ist, um eine Simulation und Optimierung der Modelle des Terahertz-Array-Chips, der Terahertz-Linse und des integrierten Terahertz-Frontends durchzuführen, um den optimalen Leistungsindexparameter des Terahertz-Array-Chips, den optimalen Leistungsindexparameter der Terahertz-Linse und den optimalen Leistungsindexparameter des integrierten Terahertz-Frontends zu erlangen.

8. Integrierte Forschungs- und Entwicklungsplattform für ein Terahertz-Fokalebenen-Bildgebungssystem nach Anspruch 2, wobei das Terahertz-Chipebene-Simulations- und Analysemodul (12) Folgendes umfasst eine kollaborative Chipebenen-Konstruktions- und Optimierungseinheit (121), eine nichtlineare Vorrichtungskonstruktions- und optimierungseinheit (122), und eine nicht-elektrische große lineare Vorrichtungskonstruktions- und optimierungseinheit (123), wobei
die kollaborative Chipebenen-Konstruktions- und Optimierungseinheit (121) konfiguriert ist, um den optimalen Leistungsindexparameter des Terahertz-Array-Chips zu empfangen, den optimalen Leistungsindexparameters des Terahertz-Array-Chips an die nichtlineare Vorrichtungskonstruktions- und optimierungseinheit (122) zu übertragen, und den Terahertz-Array-Chip zu modellieren, um ein nichtlineares physikalisches Modell der Vorrichtung und ein physikalisches Modell der nicht-elektrischen großen linearen Vorrichtung zu erlangen;
die nichtlineare Vorrichtungskonstruktions- und optimierungseinheit (122) konfiguriert ist, um einen geometrischen Strukturparameter für eine nichtlineare Vorrichtung und einen Materialparameters für eine nichtlineare Vorrichtung basierend auf dem optimalen Leistungsindexparameter des Terahertz-Array-Chips und dem physikalischen Modell der nichtlinearen Vorrichtung zu erlangen, und den geometrischen Strukturparameter der nichtlinearen Vorrichtung und den Materialparameter der nichtlinearen Vorrichtung an die kollaborative Chipebenen-Konstruktions- und Optimierungseinheit (121) zurückzugeben;
die nicht-elektrische große lineare Vorrichtungskonstruktions- und optimierungseinheit (123) konfiguriert ist, um einen geometrischen Strukturparameters für eine nicht-elektrische große lineare Vorrichtung und einen Materialparameter für eine nicht-elektrische große lineare Vorrichtung basierend auf dem physikalischen Modells für eine nicht-elektrische große lineare Vorrichtung zu erlangen, und den geometrischen Strukturparameters für eine nicht-elektrische große lineare Vorrichtung und den Materialparameter für eine nicht-elektrische große lineare Vorrichtung an die kollaborative Chipebenen-Konstruktions- und Optimierungseinheit (121) zurückzugeben; und
die kollaborative Chipebenen-Konstruktions- und Optimierungseinheit (121) konfiguriert ist, um ein optimiertes physikalisches Modell des Terahertz-Array-Chips basierend auf dem geometrischen Strukturparameter der nichtlinearen Vorrichtung, des Materialparameters der nichtlinearen Vorrichtung, des geometrischen Strukturparameters der nicht-elektrischen großen linearen Vorrichtung und des Materialparameters der nicht-elektrischen großen linearen Vorrichtung zu erlangen, und das optimierte physikalische Modell des Terahertz-Array-Chips an das Terahertz-Systemebene-Simulations- und Analysemodul (14) zu übertragen.

9. Integrierte Forschungs- und Entwicklungsplattform für ein Terahertz-Fokalebenen-Bildgebungssystem nach Anspruch 2, wobei das Terahertz-Komponentenebene-Simulations- und Analysemodul (13) Folgendes umfasst eine kollaborative Komponentenebenen-Konstruktions- und Simulationseinheit (131), eine elektrische große lineare Komponentenkonstruktions- und optimierungseinheit (132), und eine Verbindungsstruktursimulationseinheit (133), wobei
die kollaborative Komponentenebenen-Konstruktions- und Simulationseinheit (131) konfiguriert ist, um den optimalen Leistungsindexparameter der Terahertz-Linse und den optimalen Leistungsindexparameter des integrierten Frontends zu erlangen, ein physikalisches Modells der Terahertz-Linse an die elektrische große lineare Komponentenkonstruktions- und optimierungseinheit (132) zu übertragen, und ein physikalisches Modell einer Verbindungsstruktur des integrierten Terahertz-Frontends an die Verbindungsstruktursimulationseinheit (133) zu übertragen;
die elektrische große lineare Komponentenkonstruktions- und optimierungseinheit (132) konfiguriert ist, um den geometrischen Strukturparameter und den Materialparameter der Terahertz-Linse basierend auf dem optimalen Leistungsindexparameter der Terahertz-Linse und dem physikalischen Modell der Terahertz-Linse zu erlangen, und den geometrischen Strukturparameter und den Materialparameter der Terahertz-Linse an die kollaborative Komponentenebenen-Konstruktions- und Simulationseinheit (131) zurückzugeben;
wobei die Verbindungsstruktursimulationseinheit (133) konfiguriert ist, um einen geometrischen Strukturparameter und einen Materialparameter der Verbindungsstruktur basierend auf dem optimalen Leistungsindexparameter des integrierten Terahertz-Frontends und dem physikalischen Modell der Verbindungsstruktur des integrierten Terahertz-Frontends zu erlangen, und den geometrischen Strukturparameter und den Materialparameter der Verbindungsstruktur an die kollaborative Komponentenebenen-Konstruktions- und Simulationseinheit (131) zurückzugeben; und
wobei die kollaborative Komponentenebenen-Konstruktions- und Simulationseinheit (131) konfiguriert ist, um ein optimiertes physikalisches Modell der Terahertz-Linse basierend auf dem geometrischen Strukturparameter und dem Materialparameter der Terahertz-Linse zu erlangen, ein optimiertes physikalisches Modell der Verbindungsstruktur basierend auf dem geometrischen Strukturparameter und dem Materialparameter der Verbindungsstruktur zu erlangen, und das optimierte physikalische Modell der Terahertz-Linse und das optimierte physikalische Modell der Verbindungsstruktur an das Terahertz-Systemebene-Simulations- und Analysemodul (14) zu übertragen.

10. Integrierte Forschungs- und Entwicklungsplattform für ein Terahertz-Fokalebenen-Bildgebungssystem nach Anspruch 2, wobei das Terahertz-Systemebene-Simulations- und Analysemodul (14) eine kollaborative Zielvollwellen-Simulationseinheit (141), eine kollaborative Systemsimulationseinheit (142), eine Systemsimulationsstruktur-Speichereinheit (143) und eine Systemleistungsbewertungseinheit (144) umfasst, wobei
die Zielvollwellen-Simulationseinheit (141) konfiguriert ist, um den Merkmalsparameter des Ziels basierend auf einem Vollwellenanalyseverfahren zu erlangen, und den Merkmalsparameter des Ziels an die kollaborative Systemsimulationseinheit (142) zu übertragen;
die kollaborative Systemsimulationseinheit (142) konfiguriert ist, um einen Simulationsausgangssignalparameter des physikalischen Modells des integrierten Terahertz-Frontends basierend auf dem optimierten physikalischen Modell des integrierten Terahertz-Frontends und dem Merkmalsparameter des Ziels zu erlangen, und den Simulationsausgangssignalsparameter des physikalischen Modells des integrierten Terahertz-Frontends an die Systemsimulationsstruktur-Speichereinheit (143) zu übertragen;
wobei die Systemsimulationsstruktur-Speichereinheit (143) konfiguriert ist, um den Simulationsausgangssignalsparameter des physikalischen Modells des integrierten Terahertz-Frontends zu empfangen und zu speichern, und den Simulationsausgangssignalparameter des physikalischen Modells des integrierten Terahertz-Frontends an die sehr großskalige Arraysignal-Echtzeiterfassungs- und -verarbeitungs-Subplattform (5) zu übertragen, um das Simulationsbild des Ziels zu erlangen; und
wobei die Systemleistungsbewertungseinheit (144) konfiguriert ist, um eine Tabelle zur Bewertung der Systementwurfsleistung des integrierten Terahertz-Frontends basierend auf dem Simulationsbild des Ziels zu erlangen.

11. Integrierte Forschungs- und Entwicklungsplattform für ein Terahertz-Fokalebenen-Bildgebungssystem nach Anspruch 3, wobei das Waferebenen-Präzisionspositionierungs- und Umgebungskontrollmodul (21) eine fotoelektrische Abschirmungs- und Präzisions-Mikroumgebungssteuereinheit (211), eine Mikrovibrations-Isoliereinheit (212), eine ultraschnelle Hoch-Tief-Temperatur-Präzisionsumgebungssteuerung (213), eine automatische Positionierungseinheit für dreidimensionale Präzisionsverschiebungsplattform (214), eine hochauflösende digitale mikroskopische Bildgebungseinheit (215), eine Niedertemperatur-Frostschutzsteuerung (216), eine Bewertungs- und Bildverarbeitungseinheit für dreidimensionale Abmessungsmessung (217), eine dreidimensionale Mikrometerebenen-Verlagerungssteuerungseinheit (218), und eine mehrdimensionale Waferebenen-Präzisionskalibrierungseinheit (219) umfasst, wobei
die fotoelektrische Abschirmungs- und Präzisions-Mikroumgebungssteuereinheit (211) konfiguriert ist, um eine optische schalltote Kammerumgebung und eine elektromagnetische schalltote Kammerumgebung für den Terahertz-Array-Chip bereitzustellen;
die Mikrovibrations-Isoliereinheit (212) konfiguriert ist, um eine stabile Vibrationsumgebung für den Terahertz-Array-Chip bereitzustellen;
die ultraschnelle Hoch-Tief-Temperatur-Präzisionsumgebungssteuerung (213) konfiguriert ist, um eine stabile Umgebungstemperatur für den Terahertz-Array-Chip bereitzustellen;
die Niedertemperatur-Frostschutzsteuerung (216) konfiguriert ist, um eine trockene Umgebung mit niedrigen Temperaturen und ohne Frost für den Terahertz-Array-Chip bereitzustellen;
die automatische Positionierungseinheit für dreidimensionale Präzisionsverschiebungsplattform (214) konfiguriert ist, um eine Verlagerung des Terahertz-Array-Chips steuern;
die hochauflösende digitale mikroskopische Bildgebungseinheit (215) konfiguriert ist, um mikroskopische Bildgebung auf dem Terahertz-Array-Chip durchzuführen und ein Bild des Terahertz-Array-Chips zu speichern;
die Bewertungs- und Bildverarbeitungseinheit für dreidimensionale Abmessungsmessung (217) konfiguriert ist, um eine Struktur auf dem Terahertz-Array-Chip zu messen und eine Merkmalsdimension der Struktur auf dem Terahertz-Array-Chip auszugeben;
die dreidimensionale Mikrometerebenen-Verlagerungssteuerungseinheit (218) konfiguriert ist, um eine Mikroverschiebung des Terahertz-Array-Chips zu steuern, um den Terahertz-Array-Chip zu steuern, dass er sich in einem Sichtfeld der hochauflösenden digitalen mikroskopischen Bildgebungseinheit (215) befindet; und
die mehrdimensionale Waferebenen-Präzisionskalibrierungseinheit (219) konfiguriert ist, um einen On-Chip-Präzisionskalibrierungsfilm für den Terahertz-Array-Chip bereitzustellen, um On-Chip-Prüfungen und Kalibrierungen auf dem Terahertz-Array-Chip durchzuführen.

12. Integrierte Forschungs- und Entwicklungsplattform für ein Terahertz-Fokalebenen-Bildgebungssystem nach Anspruch 3, wobei das Terahertz-Chip-Gleichstromparameter-Prüf- und Charakterisierungsmodul (22) eine Gleichstromparameter-Prüf- und Analyseeinheit (220), eine Gleichstrom-Vorspannungserregungs- und -Reaktionsprüfeinheit (221), eine Wechselspannungserregungs- und Reaktionsprüfeinheit (222) und eine Impulserregungs- und Reaktionsprüfeinheit (223) umfasst, wobei
die Gleichstrom-Vorspannungserregungs- und -Reaktionsprüfeinheit (221) konfiguriert ist, um einen I-V-Merkmalsparameter des Terahertz-Array-Chips zu erlangen;
die Wechselspannungserregungs- und Reaktionsprüfeinheit (222) konfiguriert ist, um einen C-V-Merkmalsparameter des Terahertz-Array-Chips zu erlangen;
die Impulserregungs- und Reaktionsprüfeinheit (223) konfiguriert ist, um einen Impulsmerkmalsparameter des Terahertz-Array-Chips zu erlangen;
die Gleichstromparameter-Prüf- und -Analyseeinheit (220) konfiguriert ist, um eine Gleichstromeigenschaft des Terahertz-Array-Chips basierend auf dem I-V-Merkmalsparameter, dem C-V-Merkmalsparameter und dem Impulsmerkmalsparameter zu erlangen.

13. Integrierte Forschungs- und Entwicklungsplattform für ein Terahertz-Fokalebenen-Bildgebungssystem nach Anspruch 3, wobei das Terahertz-Chip-Vektornetzparameter-Prüf- und Charakterisierungsmodul (23) eine Vektornetzparameter-Prüf- und Analyseeinheit (230), ein Terahertz-Frequenzerweiterungsmodulband N (231N), ein Kontakt-Terahertz-Signaleinspeiseeinheit (232NA), eine berührungslose Terahertz-Signaleinspeiseeinheit (232NB) und eine Kontakt-Terahertz-Signaleinspeiseeinheit (232NA) umfasst, wobei
die Vektornetzparameter-Prüf- und Analyseeinheit (230) konfiguriert ist, um ein Mikrowellenband-Erregungssignal bereitzustellen;
das Terahertz-Frequenzerweiterungsmodulband N (231N) konfiguriert ist, um eine Aufwärtskonvertierung des Mikrowellenerregungssignals durchzuführen und das Terahertz-Erregungssignal auszugeben;
das Terahertz-Erregungssignal über die Kontakt-Terahertz-Signaleinspeiseeinheit (232NA) oder die berührungslose Terahertz-Signaleinspeiseeinheit (232NB) in einen Eingangsanschluss des Terahertz-Array-Chips eingespeist wird;
ein Terahertz-Signal von dem Terahertz-Array-Chip über einen Ausgangsanschluss des Terahertz-Array-Chips ausgegeben wird und in das Terahertz-Frequenzerweiterungsmodulband N (231N) über die Kontakt-Terahertz-Signaleinspeiseeinheit (232NA) oder die kontaktlose Terahertz-Signaleinspeiseeinheit (232NB) eingespeist wird;
das Terahertz-Frequenzerweiterungsmodulband N (231N) konfiguriert ist, um eine Abwärtskonvertierung des ausgegebenen Terahertz-Signals durchzuführen, um ein Mikrowellen-Antwortsignal zu erlangen, wobei das Mikrowellen-Antwortsignal in die Vektornetzparameter-Prüf- und Analyseeinheit (230) eingegeben wird; und
wobei die Vektornetzparameter-Prüf- und Analyseeinheit (230) konfiguriert ist, um den Vektornetzparameter des Terahertz-Array-Chips basierend auf dem Mikrowellenband-Erregungssignal und dem Mikrowellen-Antwortsignal zu erlangen.

14. Integrierte Forschungs- und Entwicklungsplattform für ein Terahertz-Fokalebenen-Bildgebungssystem nach Anspruch 3, wobei das umfassende Terahertz-Chipmerkmal-Charakterisierungs- und Modellierungsmodul (24) eine Chipmerkmal-Syntheseeinheit (241), eine Pixelkonsistenz-Analyseeinheit (242), und eine Vorrichtungsmodellierungs- und Parameterextraktionseinheit (243) umfasst, wobei
die Chipmerkmal-Syntheseeinheit (241) konfiguriert ist, um den Gleichstromparameter des Terahertz-Array-Chips und den Vektornetzparameter des Terahertz-Array-Chips zu empfangen, und den Merkmalsparameter des Terahertz-Array-Chips basierend auf dem Gleichstromparameter des Terahertz-Array-Chips und dem Vektornetzparameter des Terahertz-Array-Chips zu erlangen;
die Pixelkonsistenz-Analyseeinheit (242) konfiguriert ist, um eine Konsistenz der Merkmalsparameter des Terahertz-Array-Chips basierend auf dem Merkmalsparameter des Terahertz-Array-Chips zu erlangen; und
die Vorrichtungsmodellierungs- und Parameterextraktionseinheit (243) konfiguriert ist, um das äquivalente Netzmodell des Terahertz-Array-Chips basierend auf den Konsistenzanalysedaten des Merkmalsparameters zu erstellen, einen Parameter des Modells zu extrahieren, und das Modell und den Funktionsparameter des Terahertz-Array-Chips auszugeben.

15. Integrierte Forschungs- und Entwicklungsplattform für ein Terahertz-Fokalebenen-Bildgebungssystem nach Anspruch 4, wobei das hochpräzise Verlagerungs- und Drehmodul (31) eine nahtlos rekonfigurierbare quasioptische Plattform (310), eine programmierbare Steuereinheit (311), eine hochpräzise dreidimensionale Verlagerungseinheit (312) und eine Mikroradius-Dreheinheit (313) umfasst, wobei
die nahtlos rekonfigurierbare quasioptische Plattform (310) konfiguriert ist, um die zu prüfende Terahertz-Linse oder die zu prüfende Terahertz-Antenne zu fixieren;
die programmierbare Steuereinheit (311) konfiguriert ist, um einen Verlagerungsbefehl und einen Drehbefehl auszugeben;
die hochpräzise dreidimensionale Verlagerungseinheit (312) konfiguriert ist, um die Verlagerung der zu prüfenden Terahertz-Linse oder die Verlagerung der zu prüfenden Terahertz-Antenne abhängig von der Verlagerungsdrehung zu steuern, und
die Mikroradius-Dreheinheit (313) konfiguriert ist, um eine Drehung der zu prüfenden Terahertz-Linse oder eine Drehung der zu prüfenden Terahertz-Antenne als Reaktion auf den Drehbefehl zu steuern.

## Revendications

1. Plate-forme intégrée de recherche et de développement pour un système d'imagerie à plan focal térahertz, comprenant une sous-plate-forme de conception et de simulation collaborative intégrée térahertz (1), une sous-plate-forme de test et de modélisation de puce térahertz (2), une sous-plate-forme de test et de caractérisation de faisceau térahertz (3), une sous-plate-forme de test et de vérification de principe de système térahertz (4) et une sous-plate-forme d'acquisition et de traitement en temps réel de signaux de réseau à très grande échelle (5), dans laquelle :
la sous-plateforme de conception et de simulation collaborative intégrée térahertz (1) est configurée pour obtenir un paramètre d'indice de performance optimal d'une puce de réseau térahertz du système d'imagerie à plan focal térahertz, un paramètre d'indice de performance optimal d'une lentille térahertz et un paramètre d'indice de performance optimal d'une face avant intégrée térahertz en effectuant la conception et l'optimisation sur la base d'une architecture de système du système d'imagerie à réseau à plan focal térahertz, obtenir un indice de paramètre physique de la puce à réseau térahertz, un paramètre d'indice physique de la lentille térahertz et un indice de paramètre physique de la face avant intégrée térahertz, respectivement sur la base du paramètre d'indice de performance optimal de la puce à réseau térahertz, le paramètre d'indice de performance optimale de la lentille térahertz et le paramètre d'indice de performance optimale de la face avant intégrée térahertz, obtenir des données de sortie de simulation sur la base de l'indice de paramètre physique de la puce réseau térahertz, de l'indice de paramètre physique de la lentille térahertz et de l'indice de paramètre physique de la face avant intégrée térahertz, un paramètre d'environnement d'application et un paramètre de caractéristique d'une cible, et transmettre les données de sortie de simulation à la sous-plateforme (5) d'acquisition et de traitement de signaux de réseau à très grande échelle, la sous-plateforme (5) d'acquisition et de traitement de signaux de réseau à très grande échelle produisant un résultat et une image de simulation d'une scène et d'une cible ;
la sous-plateforme de test et de modélisation de puces térahertz (2) est configurée pour obtenir un paramètre de courant continu de la puce à réseau térahertz et un paramètre de réseau vectoriel de la puce à réseau térahertz, obtenir un modèle et un paramètre de caractéristique de la puce à réseau térahertz sur la base du paramètre de courant continu de la puce à réseau térahertz et du paramètre de réseau vectoriel de la puce à réseau térahertz, transmettre le modèle de la puce de réseau térahertz à la sous-plateforme de conception et de simulation collaborative intégrée térahertz (1) pour optimiser un paramètre de structure géométrique et un paramètre de matériau de la puce de réseau térahertz, et transmettre le paramètre de caractéristique de la puce de réseau térahertz à la sous-plateforme de test et de vérification de principe du système térahertz (5) en tant que données de référence d'évaluation pour la détection de pixels aveugles ; et
la plate-forme intégrée de recherche et de développement pour un système d'imagerie à plan focal térahertz est **caractérisée par le fait que** :
la sous-plateforme de test et de caractérisation de faisceau térahertz (3) est configurée pour émettre un signal d'excitation térahertz et une onde térahertz rayonnant librement dans l'espace, effectuer une transformation de polarisation et une séparation de faisceau sur l'onde térahertz, et irradier l'onde térahertz après la transformation de polarisation et la séparation de faisceau sur la lentille térahertz à tester ou sur une antenne térahertz à tester ; obtenir un paramètre de réseau vectoriel de l'antenne térahertz à tester sur la base du signal térahertz émis et d'un signal provenant de l'antenne térahertz à tester ou un paramètre de réseau vectoriel de la lentille térahertz à tester sur la base d'un signal térahertz émis et d'un signal provenant de la lentille térahertz à tester ; obtenir un paramètre de test d'antenne de l'antenne térahertz à tester sur la base du paramètre de réseau vectoriel de l'antenne térahertz à tester, et obtenir un paramètre de test de lentille de la lentille térahertz à tester sur la base du paramètre de réseau vectoriel de la lentille térahertz à tester ; introduire le paramètre de test de l'antenne et le paramètre de test de la lentille dans la sous-plateforme de simulation et de conception collaborative intégrée térahertz (1) en tant que données de référence pour la conception, l'optimisation et l'itération de la lentille térahertz et de la face avant intégrée térahertz ; et introduire le paramètre de test de l'antenne dans la sous-plateforme de test et de vérification de principe du système térahertz (4) en tant que données de référence pour l'analyse de la détection des pixels aveugles ;
la sous-plateforme (4) de test et de vérification de principe du système térahertz est configurée pour générer un signal de modulation térahertz et traiter le signal de modulation térahertz pour obtenir une onde de modulation térahertz en espace libre, irradier l'onde de modulation térahertz en espace libre sur la face avant intégrée térahertz à tester, et obtenir une amplitude et une phase d'un signal de fréquence intermédiaire multicanal à partir de la face avant intégrée térahertz à tester, obtenir un pixel aveugle et une distribution de non-uniformité de la face avant intégrée sur la base de l'amplitude et de la phase du signal de fréquence intermédiaire multicanal, du paramètre de caractéristique de la puce à réseau térahertz obtenu par la sous-plateforme de test et de modélisation de puce térahertz (2) et du paramètre de test d'antenne obtenu par la sous-plateforme de test et de caractérisation de faisceau térahertz (3), et transmettre l'amplitude et la phase du signal de fréquence intermédiaire multicanal à la sous-plateforme d'acquisition et de traitement en temps réel de signaux de réseau à très grande échelle (5) ; et
la sous-plateforme (5) d'acquisition et de traitement en temps réel des signaux de réseaux à très grande échelle est configurée pour convertir l'amplitude et la phase du signal de fréquence intermédiaire multicanal en un signal numérique, effectuer un prétraitement et un traitement d'image sur le signal numérique pour obtenir l'image de la cible et le résultat de l'identification, et transmettre l'image de la cible et le résultat de l'identification à la sous-plateforme (4) de test et de vérification du principe du système térahertz en vue de l'affichage.

2. Plate-forme intégrée de recherche et de développement pour un système d'imagerie à plan focal térahertz selon la revendication 1, dans laquelle la sous-plate-forme intégrée de conception et de simulation collaborative térahertz (1) comprend un module de simulation et d'analyse au niveau du comportement du système térahertz (11), un module de simulation et d'analyse au niveau de la puce térahertz (12), un module de simulation et d'analyse au niveau du composant térahertz (13) et un module de simulation et d'analyse au niveau du système térahertz (14), dans laquelle
le module (11) de simulation et d'analyse du comportement du système térahertz est configuré pour obtenir le paramètre d'indice de performance optimal de la puce réseau térahertz, le paramètre d'indice de performance optimal de la lentille térahertz et le paramètre d'indice de performance optimal de la face avant intégrée térahertz en effectuant la conception et l'optimisation sur la base du paramètre de l'environnement d'application, du paramètre de la caractéristique de la cible, et l'architecture du système d'imagerie à réseau plan focal térahertz, et transmettre le paramètre d'indice de performance optimal de la puce à réseau térahertz, le paramètre d'indice de performance optimal de la lentille térahertz et le paramètre d'indice de performance optimal de la face avant intégrée térahertz au module de simulation et d'analyse au niveau de la puce térahertz (12) et au module de simulation et d'analyse au niveau du composant térahertz (13) ;
le module (12) de simulation et d'analyse au niveau de la puce térahertz est configuré pour obtenir le paramètre de structure géométrique et le paramètre de matériau de la puce réseau térahertz sur la base du paramètre d'indice de performance optimale de la puce réseau térahertz, pour obtenir l'indice de paramètre physique de la puce réseau térahertz sur la base du paramètre de structure géométrique et du paramètre de matériau de la puce réseau térahertz, et pour obtenir des données de sortie de simulation de la puce réseau térahertz sur la base de l'indice de paramètre physique de la puce réseau térahertz ;
le module (13) de simulation et d'analyse au niveau du composant térahertz est configuré pour obtenir le paramètre de structure géométrique et le paramètre de matériau de la lentille térahertz sur la base du paramètre d'indice de performance optimale de la lentille térahertz, pour obtenir l'indice de paramètre physique de la lentille térahertz sur la base du paramètre de structure géométrique et du paramètre de matériau de la lentille térahertz, et pour obtenir des données de sortie de simulation de la lentille térahertz sur la base de l'indice de paramètre physique de la lentille térahertz ;
le module (14) de simulation et d'analyse au niveau du système térahertz est configuré pour obtenir un paramètre de structure géométrique et un paramètre de matériau de la lentille térahertz sur la base du paramètre d'indice de performance optimale de la face avant intégrée térahertz, pour obtenir l'indice de paramètre physique de la face avant intégrée térahertz sur la base du paramètre de structure géométrique et du paramètre de matériau de la face avant intégrée térahertz, et pour obtenir des données de sortie de simulation de la face avant intégrée térahertz sur la base de l'indice de paramètre physique de la face avant intégrée térahertz.

3. Plate-forme intégrée de recherche et de développement pour un système d'imagerie à plan focal térahertz selon la revendication 1, dans laquelle la sous-plate-forme de test et de modélisation de puce térahertz (2) comprend un module de positionnement de précision et de contrôle de l'environnement au niveau de la plaquette (21), un module de caractérisation et de paramétrage de puce térahertz à courant continu (22), un module de test et de caractérisation de paramètres de réseau vectoriel de puce térahertz (23), et un module de modélisation et de caractérisation complète de puce térahertz (24), et dans laquelle
le module (21) de positionnement précis et de contrôle de l'environnement au niveau de la plaquette est configuré pour fixer la puce à réseau térahertz ;
le module de caractérisation et de paramétrage du courant continu de la puce térahertz (22) est configuré pour obtenir le paramètre de courant continu de la puce à réseau térahertz et transmettre le paramètre de courant continu au module de modélisation et de caractérisation complète de la puce térahertz (24) ;
le module de caractérisation et de test du paramètre de réseau vectoriel de la puce térahertz (23) est configuré pour obtenir le paramètre de réseau vectoriel de la puce à réseau térahertz et transmettre le paramètre de réseau vectoriel au module de modélisation et de caractérisation complète de la puce térahertz (24) ;
le module de modélisation et de caractérisation complète de la fonction de puce térahertz (24) est configuré pour obtenir le modèle et le paramètre de caractéristique de la puce à réseau térahertz sur la base du paramètre de courant continu de la puce à réseau térahertz et du paramètre de réseau vectoriel de la puce à réseau térahertz, transmettre le modèle de la puce de réseau térahertz à la sous-plateforme de conception et de simulation collaborative intégrée térahertz (1) pour optimiser le paramètre de structure géométrique et le paramètre de matériau de la puce de réseau térahertz, et transmettre le paramètre de caractéristique de la puce de réseau térahertz à la sous-plateforme de test et de vérification de principe du système térahertz (5) en tant que données de référence d'évaluation pour la détection de pixels aveugles.

4. Plate-forme intégrée de recherche et de développement pour un système d'imagerie à plan focal térahertz selon la revendication 1, dans laquelle la sous-plate-forme de test et de modélisation de puce térahertz (3) comprend un module de rotation et de déplacement haute précision (31), un module d'antenne conique térahertz (32), un module de transformation de faisceau quasi-optique térahertz (33), un module de test et de caractérisation de paramètre de réseau vectoriel térahertz (34), un module de caractérisation de caractéristique d'antenne térahertz (35), et un module de caractérisation de caractéristique de lentille quasi-optique térahertz (36), et dans laquelle
le module de déplacement et de rotation de haute précision (31) est configuré pour fixer la lentille térahertz à tester ou l'antenne térahertz à tester, et pour contrôler un déplacement et un angle de rotation de la lentille térahertz à tester ou un déplacement et un angle de rotation de l'antenne térahertz à tester ;
le module de test et de caractérisation des paramètres du réseau vectoriel térahertz (34) est configuré pour émettre le signal d'excitation térahertz via un port, et le module d'antenne conique térahertz (32) est configuré pour émettre l'onde térahertz rayonnant librement dans l'espace ;
le module de conversion de faisceau quasi-optique térahertz (33) est configuré pour recevoir l'onde térahertz, effectuer une transformation de polarisation et une séparation de faisceau sur l'onde térahertz, et irradier l'onde térahertz après la transformation de polarisation et la séparation de faisceau sur la lentille térahertz à tester ou l'antenne térahertz à tester ;
le module (34) de test et de caractérisation des paramètres du réseau vectoriel térahertz est configuré pour recevoir un signal de réponse térahertz via un autre port de la lentille térahertz à tester ou de l'antenne térahertz à tester ;
le module de test et de caractérisation des paramètres du réseau vectoriel térahertz (34) est configuré pour obtenir le paramètre du réseau vectoriel de l'antenne térahertz à tester sur la base du signal térahertz émis par le port et du signal reçu de l'antenne térahertz à tester par l'intermédiaire d'un autre port, ou pour obtenir le paramètre du réseau vectoriel de la lentille térahertz à tester sur la base du signal térahertz émis par le port et du signal reçu de la lentille térahertz à tester par l'intermédiaire d'un autre port ;
le module de caractérisation des caractéristiques de l'antenne térahertz (35) est configuré pour obtenir le paramètre de test de l'antenne térahertz à tester sur la base du paramètre de réseau vectoriel de l'antenne térahertz à tester, et pour transmettre le paramètre de test de l'antenne à la sous-plateforme de simulation et de conception collaborative intégrée térahertz (1) et à la sous-plateforme de test et de vérification de principe du système térahertz (4) ; et
le module de caractérisation des caractéristiques de la lentille quasi-optique térahertz (36) est configuré pour obtenir le paramètre de test de la lentille térahertz à tester sur la base du paramètre de réseau vectoriel de la lentille térahertz à tester, et pour transmettre le paramètre de test de la lentille térahertz à tester à la sous-plateforme de simulation et de conception collaborative intégrée térahertz (1).

5. Plate-forme intégrée de recherche et de développement pour un système d'imagerie à plan focal térahertz selon la revendication 1, dans laquelle la sous-plate-forme de test de système et de vérification de principe térahertz (4) comprend un module de génération de signal de modulation térahertz (41), un module d'antenne conique térahertz (42), un module de test de signal de sortie de canal (43), un module de détection et d'analyse de la non-uniformité et des pixels aveugles (44) et un module d'affichage (45) et dans laquelle
le module de génération de signaux de modulation térahertz (41) est configuré pour générer un signal de modulation térahertz ;
le module d'antenne conique térahertz (42) est configuré pour convertir le signal de modulation térahertz en une onde de modulation térahertz en espace libre et pour irradier l'onde de modulation térahertz en espace libre sur la face avant intégrée térahertz à tester, la face avant intégrée térahertz à tester émettant le signal de fréquence intermédiaire multicanal et transmettant le signal de fréquence intermédiaire multicanal au module de test du signal de sortie de canal (43) ;
le module de test du signal de sortie du canal (43) est configuré pour obtenir l'amplitude et la phase du signal de fréquence intermédiaire multicanal et pour transmettre l'amplitude et la phase au module de détection et d'analyse des pixels aveugles et de la non-uniformité (44) et à la sous-plateforme d'acquisition et de traitement en temps réel des signaux de réseaux à très grande échelle (5) ;
le module (44) de détection et d'analyse des pixels aveugles et de la non-uniformité est configuré pour obtenir le pixel aveugle et la distribution de non-uniformité de la face avant intégrée térahertz sur la base de l'amplitude et de la phase du signal de fréquence intermédiaire multicanal, du paramètre de caractéristique de la puce à réseau térahertz obtenu par la sous-plateforme (2) de test et de modélisation de la puce térahertz et du paramètre de test de l'antenne obtenu par la sous-plateforme (3) de test et de caractérisation des faisceaux térahertz ; et
le module d'affichage (45) est configuré pour afficher l'amplitude et la phase du signal de fréquence intermédiaire multicanal en mode image.

6. Plate-forme intégrée de recherche et de développement pour un système d'imagerie plan focal térahertz selon la revendication 1, dans laquelle la sous-plate-forme (5) d'acquisition et de traitement en temps réel de signaux de réseaux à très grande échelle comprend un module d'acquisition de signaux de réseaux (51), un module de prétraitement de signaux de réseaux (52) et un module de traitement d'images (53), et dans laquelle
le module d'acquisition de signaux de réseau (51) est configuré pour convertir l'amplitude et la phase du signal de fréquence intermédiaire multicanal provenant de la sous-plateforme (4) de test et de vérification de principe du système térahertz en un signal numérique, et pour transmettre le signal numérique au module (52) de prétraitement des signaux de réseau ;
le module de prétraitement des signaux de réseau (52) est configuré pour effectuer un prétraitement d'image sur le signal numérique afin d'obtenir une image prétraitée, et transmettre l'image prétraitée au module de traitement d'image (53) ; et
le module de traitement d'images (53) est configuré pour effectuer un traitement d'images sur l'image prétraitée afin d'obtenir l'image de la cible et le résultat de l'identification, et pour transmettre l'image de la cible et le résultat de l'identification à la sous-plateforme (4) de test et de vérification de principe du système térahertz en vue de leur affichage.

7. Plate-forme intégrée de recherche et de développement pour un système d'imagerie à plan focal térahertz selon la revendication 2, dans laquelle le module de simulation et d'analyse au niveau du comportement du système térahertz comprend une unité de définition de scène (111), une unité de définition de cible (112), une base de modèles de comportement de scène et de cible (113), une unité de définition de fonction de système (114), une base de modèles de comportement de composants de système (115), et une unité de conception et d'optimisation au niveau du comportement du système (116), dans laquelle
l'unité de définition de scène (111) est configurée pour obtenir le paramètre d'environnement de l'application et transmettre le paramètre d'environnement de l'application à la base de modèle de comportement de scène et de cible (113) ;
l'unité de définition de cible (112) est configurée pour obtenir le paramètre de caractéristique de la cible et transmettre le paramètre de caractéristique de la cible à la scène et la base de modèle de comportement de cible (113) ;
la base de modèle de comportement de la scène et de la cible (113) est configurée pour obtenir un paramètre de caractéristique de la cible de simulation du niveau de comportement et un paramètre d'environnement d'application de simulation du niveau de comportement basé sur le paramètre d'environnement d'application et le paramètre de caractéristique de la cible ;
l'unité de définition des fonctions du système (114) est configurée pour obtenir l'architecture du système térahertz sur la base d'un mode de fonctionnement du système entré, et transmettre l'architecture du système térahertz à la base de modèles de comportement des composants du système (115) ;
la base de modèles de comportement des composants du système (115) est configurée pour obtenir des modèles de la puce à réseau térahertz, de la lentille térahertz et de la face avant intégrée térahertz sur la base de l'architecture du système térahertz, et pour transmettre les modèles de la puce à réseau térahertz, de la lentille térahertz et de la face avant intégrée térahertz à l'unité de conception et d'optimisation du niveau de comportement du système (116) ; et
l'unité de conception et d'optimisation au niveau du comportement du système (116) est configurée pour effectuer une simulation et une optimisation sur les modèles de la puce à réseau térahertz, de la lentille térahertz et de la face avant intégrée térahertz afin d'obtenir le paramètre d'indice de performance optimal de la puce à réseau térahertz, le paramètre d'indice de performance optimal de la lentille térahertz et le paramètre d'indice de performance optimal de la face avant intégrée térahertz.

8. Plate-forme intégrée de recherche et de développement pour un système d'imagerie à plan focal térahertz selon la revendication 2, dans laquelle le module de simulation et d'analyse au niveau de la puce térahertz (12) comprend une unité de conception et d'optimisation collaborative au niveau de la puce (121), une unité de conception et d'optimisation de dispositifs non linéaires (122) et une unité de conception et d'optimisation de dispositifs linéaires non électriquement grands (123), dans laquelle
l'unité de conception et d'optimisation collaborative au niveau de la puce (121) est configurée pour recevoir le paramètre d'indice de performance optimal de la puce à réseau térahertz, transmettre le paramètre d'indice de performance optimal de la puce à réseau térahertz à l'unité de conception et d'optimisation de dispositif non linéaire (122), et modéliser la puce à réseau térahertz pour obtenir un modèle physique de dispositif non linéaire et un modèle physique de dispositif linéaire non électriquement grand ;
l'unité de conception et d'optimisation de dispositifs non linéaires (122) est configurée pour obtenir un paramètre de structure géométrique de dispositif non linéaire et un paramètre de matériau de dispositif non linéaire sur la base du paramètre d'indice de performance optimal de la puce de réseau térahertz et du modèle physique de dispositif non linéaire, et renvoie le paramètre de structure géométrique de dispositif non linéaire et le paramètre de matériau de dispositif non linéaire à l'unité de conception et d'optimisation collaborative au niveau de la puce (121) ;
l'unité de conception et d'optimisation de dispositifs linéaires non électriques de grande taille (123) est configurée pour obtenir un paramètre de structure géométrique de dispositifs linéaires non électriques de grande taille et un paramètre de matériau de dispositifs linéaires non électriques de grande taille sur la base du modèle physique de dispositifs linéaires non électriques de grande taille, et pour renvoyer le paramètre de structure géométrique de dispositifs linéaires non électriques de grande taille et le paramètre de matériau de dispositifs linéaires non électriques de grande taille à l'unité de conception et d'optimisation collaboratives au niveau de la puce (121) ; et
l'unité de conception et d'optimisation collaborative au niveau de la puce (121) est configurée pour obtenir un modèle physique optimisé de la puce de réseau térahertz sur la base du paramètre de structure géométrique du dispositif non linéaire, du paramètre de matériau du dispositif non linéaire, du paramètre de structure géométrique du dispositif linéaire non électriquement grand et du paramètre de matériau du dispositif linéaire non électriquement grand, et pour transmettre le modèle physique optimisé de la puce de réseau térahertz au module de simulation et d'analyse au niveau du système térahertz (14).

9. Plate-forme intégrée de recherche et de développement pour un système d'imagerie à plan focal térahertz selon la revendication 2, dans laquelle le module de simulation et d'analyse au niveau du composant térahertz (13) comprend une unité de conception et d'optimisation collaborative au niveau du composant (131), une unité de conception et d'optimisation de composant linéaire électriquement grand (132) et une unité de simulation de structure d'interconnexion (133), dans laquelle
l'unité de conception et de simulation collaborative au niveau des composants (131) est configurée pour recevoir le paramètre d'indice de performance optimal de la lentille térahertz et le paramètre d'indice de performance optimal de la face avant intégrée, transmettre un modèle physique de la lentille térahertz à l'unité de conception et d'optimisation de composant linéaire électriquement grand (132) et transmettre un modèle physique d'une structure d'interconnexion de la face avant intégrée térahertz à l'unité de simulation de la structure d'interconnexion (133) ;
l'unité de conception et d'optimisation du module linéaire électriquement grand (132) est configurée pour obtenir le paramètre de structure géométrique et le paramètre de matériau de la lentille térahertz sur la base du paramètre d'indice de performance optimal de la lentille térahertz et du modèle physique de la lentille térahertz, et pour renvoyer le paramètre de structure géométrique et le paramètre de matériau de la lentille térahertz à l'unité de conception et de simulation collaborative au niveau du composant (131) ;
l'unité de conception de structure d'interconnexion (133) est configurée pour obtenir le paramètre de structure géométrique et un paramètre de matériau de la structure d'interconnexion sur la base du paramètre d'indice de performance optimal de la face avant intégrée térahertz et du modèle physique de la structure d'interconnexion de la face avant intégrée térahertz et pour renvoyer le paramètre de structure géométrique et le paramètre de matériau de la structure d'interconnexion à l'unité de conception et de simulation collaborative au niveau du composant (131) ; et
l'unité de conception et de simulation collaborative au niveau du composant (131) est configurée pour obtenir un modèle physique optimisé de la lentille térahertz sur la base du paramètre de structure géométrique et du paramètre de matériau de la lentille térahertz, pour obtenir un modèle physique optimisé de la structure d'interconnexion sur la base du paramètre de structure géométrique et du paramètre de matériau de la structure d'interconnexion, et pour transmettre le modèle physique optimisé de la lentille térahertz et le modèle physique optimisé de la structure d'interconnexion au module de simulation et d'analyse au niveau du système térahertz (14).

10. Plate-forme intégrée de recherche et de développement pour un système d'imagerie à plan focal térahertz selon la revendication 2, dans laquelle le module de simulation et d'analyse au niveau du système térahertz (14) comprend une unité de simulation d'onde complète de la cible (141), une unité de simulation collaborative du système (142), une unité de stockage de la structure de simulation du système (143) et une unité d'évaluation des performances du système (144), dans laquelle
l'unité de simulation de l'onde complète de la cible (141) est configurée pour obtenir le paramètre de caractéristique de la cible sur la base d'une méthode d'analyse de l'onde complète, et transmettre le paramètre de caractéristique de la cible à l'unité de simulation collaborative du système (142) ;
l'unité de simulation collaborative du système (142) est configurée pour obtenir un paramètre de signal de sortie de simulation du modèle physique de la face avant intégrée térahertz sur la base du modèle physique optimisé de la face avant intégrée térahertz et du paramètre de caractéristique de la cible, et pour transmettre le paramètre de signal de sortie de simulation du modèle physique de la face avant intégrée térahertz à l'unité de stockage de la structure de simulation du système (143) ;
l'unité de stockage de la structure de simulation du système (143) est configurée pour recevoir et stocker le paramètre du signal de sortie de simulation du modèle physique de la face avant intégrée térahertz, et transmettre le paramètre du signal de sortie de simulation du modèle physique de la face avant intégrée térahertz à la sous-plateforme d'acquisition et de traitement en temps réel du signal du réseau à très grande échelle (5) pour obtenir l'image de simulation de la cible ; et
l'unité d'évaluation des performances du système (144) est configurée pour obtenir un tableau d'évaluation des performances de la conception du système de la face avant intégrée térahertz sur la base de l'image de simulation de la cible.

11. Plate-forme intégrée de recherche et de développement pour un système d'imagerie à plan focal térahertz selon la revendication 3, dans laquelle le module de positionnement de précision et de contrôle de l'environnement au niveau de la plaquette (21) comprend une unité de blindage photoélectrique et de contrôle de précision du micro-environnement (211), une unité d'isolation des micro-vibrations (212), une unité de contrôle de précision de l'environnement ultra-rapide à haute-basse température (213), une unité de positionnement automatique de plate-forme de déplacement tridimensionnel de précision (214), une unité d'imagerie microscopique numérique à haute résolution (215), une unité de contrôle hors gel à basse température (216), une unité d'évaluation de la mesure des dimensions tridimensionnelles et de traitement des images (217), une unité de contrôle du déplacement tridimensionnel au niveau du micron (218), et une unité d'étalonnage multidimensionnel de précision au niveau de la plaquette (219), dans laquelle
l'unité de commande du blindage photoélectrique et du micro-environnement de précision (211) est configurée pour fournir un environnement de chambre anéchoïque optique et un environnement de chambre anéchoïque électromagnétique pour la puce de réseau térahertz ;
l'unité d'isolation des micro-vibrations (212) est configurée pour fournir un environnement vibratoire stable à la puce à réseau térahertz ;
l'unité de contrôle de l'environnement de précision ultra-rapide à haute et basse température (213) est configurée pour fournir une température ambiante stable à la puce de réseau térahertz ;
l'unité de contrôle hors gel à basse température (216) est configurée pour fournir un environnement sec à basse température et hors gel à la puce de réseau térahertz ;
l'unité de positionnement automatique de la plate-forme de déplacement tridimensionnel de précision (214) est configurée pour contrôler un déplacement de la puce à réseau térahertz ;
l'unité d'imagerie microscopique numérique à haute résolution (215) est configurée pour effectuer une imagerie microscopique sur la puce à réseau térahertz et stocker une image de la puce à réseau térahertz ;
l'unité d'évaluation de la mesure des dimensions tridimensionnelles et de traitement des images (217) est configurée pour mesurer une structure sur la puce à réseau térahertz et émettre une dimension de caractéristique de la structure sur la puce à réseau térahertz ;
l'unité de contrôle de déplacement tridimensionnel à l'échelle du micron (218) est configurée pour commander un microdéplacement de la puce à réseau térahertz afin de commander la localisation de la puce à réseau térahertz dans un champ de vision de l'unité d'imagerie microscopique numérique à haute résolution (215) ; et
l'unité d'étalonnage multidimensionnel de précision au niveau de la plaquette (219) est configurée pour fournir un film d'étalonnage de précision sur la puce du réseau térahertz afin d'effectuer un test et un étalonnage sur la puce du réseau térahertz.

12. Plate-forme intégrée de recherche et de développement pour un système d'imagerie à plan focal térahertz selon la revendication 3, dans laquelle le module de test et de caractérisation des paramètres de courant continu de la puce térahertz (22) comprend une unité de test et d'analyse des paramètres de courant continu (220), une unité de test de réponse et d'excitation de tension de polarisation de courant continu (221), une unité de test de réponse et d'excitation de tension de courant alternatif (222) et une unité de test de réponse et d'excitation d'impulsions (223), dans laquelle
l'unité de test d'excitation et de réponse de tension de polarisation du courant continu (221) est configurée pour obtenir un paramètre de caractéristique I-V de la puce à réseau térahertz ;
l'unité de test d'excitation et de réponse de tension du courant alternatif (222) est configurée pour obtenir un paramètre de caractéristique C-V de la puce à réseau térahertz ;
l'unité de test d'excitation et de réponse d'excitation d'impulsions (223) est configurée pour obtenir un paramètre de caractéristique d'impulsion de la puce à réseau térahertz ;
l'unité de test et d'analyse des paramètres de courant continu (220) est configurée pour obtenir une caractéristique de courant continu de la puce à réseau térahertz sur la base du paramètre de caractéristique I-V, du paramètre de caractéristique C-V et du paramètre de caractéristique d'impulsion.

13. Plate-forme intégrée de recherche et de développement pour un système d'imagerie à plan focal térahertz selon la revendication 3, dans laquelle le module de test et de caractérisation des paramètres du réseau vectoriel de la puce térahertz (23) comprend une unité de test et d'analyse des paramètres du réseau vectoriel (230), un module d'extension de fréquence térahertz-bande N (231N), une unité d'alimentation en signaux térahertz par contact (232NA), une unité d'alimentation en signaux térahertz sans contact (232NB) et une unité d'alimentation en signaux térahertz par contact (232NA), dans laquelle
l'unité de test et d'analyse des paramètres du réseau vectoriel (230) est configurée pour fournir un signal d'excitation dans la bande des micro-ondes ;
le module d'expansion de fréquence térahertz-bande N (231N) est configuré pour effectuer une conversion ascendante sur le signal d'excitation dans la bande des micro-ondes et émettre le signal d'excitation térahertz ;
le signal d'excitation térahertz est envoyé à un port d'entrée de la puce à réseau térahertz par l'intermédiaire de l'unité d'alimentation en signaux térahertz par contact (232NA) ou de l'unité d'alimentation en signaux térahertz sans contact (232NB) ;
un signal térahertz est émis par la puce à réseau térahertz via un port de sortie de la puce à réseau térahertz, et est introduit dans le module d'expansion de fréquence térahertz-bande N (231N) par l'unité d'alimentation en signaux térahertz par contact (232NA) ou l'unité d'alimentation en signaux térahertz sans contact (232NB) ;
le module d'expansion de fréquence térahertz-bande N (231N) est configuré pour effectuer une conversion descendante sur le signal térahertz émis afin d'obtenir un signal de réponse à micro-ondes, dans lequel le signal de réponse de micro-ondes est transmis à l'unité de test et d'analyse des paramètres du réseau vectoriel (230) ; et
l'unité de test et d'analyse des paramètres de réseau vectoriel (230) est configurée pour obtenir le paramètre de réseau vectoriel de la puce à réseau térahertz sur la base du signal d'excitation dans la bande des micro-ondes et du signal de réponse aux micro-ondes.

14. Plate-forme intégrée de recherche et de développement pour un système d'imagerie à plan focal térahertz selon la revendication 3, dans laquelle le module de modélisation et de caractérisation complète de la caractéristique de la puce térahertz (24) comprend une unité de synthèse de la caractéristique de la puce (241), une unité d'analyse de la cohérence des pixels (242) et une unité d'extraction de paramètre et de modélisation du dispositif (243), dans laquelle
l'unité de synthèse des caractéristiques de la puce (241) est configurée pour recevoir le paramètre de courant continu de la puce à réseau térahertz et le paramètre de réseau vectoriel de la puce à réseau térahertz et pour obtenir le paramètre de caractéristique de la puce à réseau térahertz sur la base du paramètre de courant continu de la puce à réseau térahertz et du paramètre de réseau vectoriel de la puce à réseau térahertz ;
l'unité d'analyse de la cohérence des pixels (242) est configurée pour obtenir la cohérence du paramètre de caractéristique de la puce à réseau térahertz sur la base du paramètre de caractéristique de la puce à réseau térahertz ; et
l'unité de modélisation du dispositif et d'extraction des paramètres (243) est configurée pour établir le modèle de réseau équivalent de la puce à réseau térahertz sur la base des données d'analyse de cohérence du paramètre de caractéristique, pour extraire un paramètre du modèle et pour produire le modèle et le paramètre de caractéristique de la puce à réseau térahertz.

15. Plate-forme intégrée de recherche et de développement pour un système d'imagerie à plan focal térahertz selon la revendication 4, dans laquelle le module de simulation et d'analyse au niveau du système térahertz (31) comprend une plate-forme quasi-optique reconfigurable en continu (310), une unité de commande programmable (311), une unité de déplacement tridimensionnel haute précision (312) et une unité de rotation micro-radique (313), dans laquelle
la plateforme quasi-optique reconfigurable en continu (310) est configurée pour fixer la lentille térahertz à tester ou l'antenne térahertz à tester ;
l'unité de commande programmable (311) est configurée pour émettre une commande de déplacement et une commande de rotation ;
l'unité de déplacement tridimensionnel de haute précision (312) est configurée pour commander le déplacement de la lentille térahertz à tester ou le déplacement de l'antenne térahertz à tester en réponse à la rotation de déplacement, et
l'unité de rotation micro-radique (313) est configurée pour commander la rotation de la lentille térahertz à tester ou la rotation de l'antenne térahertz à tester en réponse à la commande de rotation.
